# EUROPÄISCHE PATENTANMELDUNG

(11) **EP 4 763 468 A1**
(43) Veröffentlichungstag der Anmeldung: **24.06.2026**
(21) Anmeldenummer: 25223876.1
(22) Anmeldetag: 16.12.2025
(51) Int. Cl.: B29C 45/76, G06N 20/00

(54) **PRODUKTIONSABLAUF-ERMITTLUNGSEINRICHTUNG UND VERFAHREN ZUR WENIGSTENS TEILAUTOMATISCHEN ERMITTLUNG WENIGSTENS EINER PRODUKTIONSABLAUFGRÖSSE ZUR HERSTELLUNG EINES VORGEGEBENEN ZIEL-KUNSTSTOFFFORMTEILS, VORRICHTUNG ZUM FORMGEBENDEN HERSTELLEN VON KUNSTSTOFFFORMTEILEN UND VERFAHREN ZUM BETREIBEN DER VORRICHTUNG**

(30) Priorität: 23.12.2024 DE 102024139624; 14.03.2025 DE 102025109892
(71) Anmelder: NETSTAL Maschinen AG, 8752 Näfels (CH)
(72) Erfinder: Denzler, Björn, 8645 Rapperswil-Jona (CH)
(74) Vertreter: Hannke Bittner & Partner mbB Regensburg

(57) **Zusammenfassung**

Verfahren zur wenigstens teilautomatischen Ermittlung wenigstens einer Produktionsablaufgröße zur Herstellung eines vorgegebenen Ziel-Kunststoffformteils mittels einer Vorrichtung, insbesondere Spritzgießmaschine, zum formgebenden Herstellen von Kunststoffformteilen, wobei die Vorrichtung Produktionseinrichtungen umfassend eine Kunststoffzuführungseinrichtung zur Zuführung des zu verarbeitenden Kunststoffs als Rohmaterial, eine Plastifiziereinrichtung zur Plastifizierung und/oder Homogenisierung des zu verarbeitenden Kunststoffs, eine Einspritzeinrichtung zum Einspritzen des plastifizierten und/oder homogenisierten Kunststoffs in wenigstens eine Formgebungseinrichtung und/oder die wenigstens eine Formgebungseinrichtung zum Formen des eingespritzten Kunststoffs zu einem Kunststoffformteil aufweist, wobei die Vorrichtung und/oder die Produktionseinrichtungen gemäß einer vorgegebenen und/oder vorgebbaren Produktionsablaufgrößen einstellbar ist, welche charakteristisch ist für den Produktionsablauf der herzustellenden Kunststoffprodukte. Erfindungsgemäß werden Produktionsablauf-Datensätzen zu, zur Herstellung von vorhergehenden Ziel-Kunststoffformteilen realisierten Produktionsabläufen bereitgestellt, und auf Grundlage der Produktionsablauf-Datensätzen und in Abhängigkeit wenigstens einer für das vorgegebene Ziel-Kunststoffformteil charakteristischen Ziel-Kunststoffformteilgröße wird bzw. werden wenigstens eine Produktionsablaufgröße der Produktionsablaufgrößen ermittelt.

## Beschreibung

Die vorliegende Erfindung bezieht sich auf eine Produktionsablauf-Ermittlungseinrichtung und ein Verfahren zur wenigstens teilautomatischen Ermittlung wenigstens einer Produktionsablaufgröße zur Herstellung eines vorgegebenen Ziel-Kunststoffformteils mittels einer Vorrichtung zum insbesondere formgebenden Herstellen von Kunststoffformteilen. Weiter bezieht sich die vorliegende Erfindung auf eine Vorrichtung zum insbesondere formgebenden Herstellen von Kunststoffformteilen und ein Verfahren zum Betreiben der Vorrichtung.

Aus dem Stand der Technik sind Spritzgießmaschinen bekannt, in welchen mittels manueller Eingabe an der Bedieneinheit der Produktionsablauf in Einzelschritten erstellt wird. Dazu müssen geeignete Komponenten und Kommandos, welche die Bewegungen der Maschinenachsen ausführen, zusammengeschalten werden.

Vorgängig müssen oftmals einige der vorhandenen Komponenten in Form von Hilfssteuerungen erstellt und/oder konfiguriert werden. Nicht alle Komponenten bedingen zwar eine Hilfssteuerung, die Grundkomponenten einer Spritzgießmaschine wie etwa Schließeinheit, Spritzeinheit und dergleichen, sind immer vorhanden, müssen aber konfiguriert werden. Alle Komponenten müssen entsprechend ebenfalls manuell parametriert werden, um einen funktionierenden Produktionsablauf zu erhalten.

Um einen Produktionsablauf zu erstellen, sind detaillierte Kenntnisse über die Bedienung sowie über den Spritzgießprozess notwendig. In der Regel kann nur speziell ausgebildetes Personal diese Aufgabe übernehmen.

Aus der EP 2618981 A1 ist eine universelle Hilfssteuerung für eine Spritzgießmaschine bekannt, welche eine Bedieneinheit und eine hiermit gekoppelte Maschinensteuerung umfasst. Weiterhin umfasst die Hilfssteuerung einen von der Maschinensteuerung beaufschlagten Umrichter und einen vom Umrichter beaufschlagten regelbaren Elektromotor. Dabei ist der regelbare Elektromotor mit einer standardisierten Schnittstelle verbunden, die wahlweise an eine komplementäre standardisierte Wellen-Schnittstelle eines mechanischen oder eines hydraulischen Betriebselements anschließbar ist.

Aus der EP 2 564 278 B1 ist ein Verfahren zur Darstellung eines programmierbaren Ablaufs für eine oder mehrere Maschinen mit einem zyklisch wiederkehrenden Maschinenbetriebsablauf bekannt. Ein unter Verwendung von Kommandofunktionen programmierter oder veränderter Ablauf einzelner Prozessschritte und deren Abhängigkeiten wird dabei auf einem Bildschirm dargestellt.

Der vorliegenden Erfindung liegt die Aufgabe zugrunde, die aus dem Stand der Technik bekannten Nachteile zu überwinden und eine bedienerfreundliche Einstellung eines Produktionsablaufs bei einem Spritzgießvorgang bereitzustellen.

Die Aufgabe wird erfindungsgemäß durch die Gegenstände der unabhängigen Ansprüche gelöst. Vorteilhafte Ausführungsformen und Weiterbildungen der Erfindung sind Gegenstand der Unteransprüche.

Bei einem erfindungsgemäßen Verfahren zur wenigstens teilautomatischen, bevorzugt vollautomatischen, Ermittlung wenigstens einer Produktionsablaufgröße zur Herstellung eines vorgegebenen Ziel-Kunststoffformteils mittels einer Vorrichtung zum formgebenden Herstellen von Kunststoffformteilen weist die Vorrichtung (zur Herstellung der herzustellenden Kunststoffprodukte und/oder Kunststoffformteile) eine Vielzahl von Produktionseinrichtungen auf.

Bei dem vorgegebenen Ziel-Kunststoffformteil handelt es sich bevorzugt um ein vorgegebenes Kunststoffprodukt, dessen Herstellung (insbesondere in großen Stückzahlen und/oder als Massenartikel) beabsichtigt ist.

Bevorzugt handelt es sich bei der Vorrichtung um eine Spritzgießmaschine. Bei den Kunststoffformteil handelt es sich bevorzugt um Spritzgießteile (auch Spritzlinge genannt). Demzufolge handelt es sich bei dem Ziel-Kunststoffformteil (ebenfalls) bevorzugt um ein Ziel-Spritzgießteil.

Bevorzugt handelt es sich bei der Vorrichtung um eine Vorrichtung zum Urformen von Kunststoff-Formteilen aus Kunststoff (als Rohmaterial).

Die Produktionseinrichtungen der Vielzahl von Produktionseinrichtungen sind dabei bevorzugt einander wenigstens teilweise verschieden.

Die Vielzahl von Produktionseinrichtungen der Vorrichtung umfasst dabei bevorzugt eine Kunststoffzuführungseinrichtung zur Zuführung des zu verarbeitenden Kunststoffs (als Rohmaterial bzw. welcher bevorzugt als Rohmaterial vorliegt), eine Plastifiziereinrichtung zur Plastifizierung und/oder Homogenisierung des zu verarbeitenden Kunststoffs, bevorzugt eine Einspritzeinrichtung zum Einspritzen des plastifizierten und/oder homogenisierten Kunststoffs in wenigstens eine Formgebungseinrichtung und/oder die wenigstens eine Formgebungseinrichtung zum Formen des eingespritzten Kunststoffs zu einem Kunststoffformteil. Dabei kann die Einspritzeinrichtung (Einspritzeinheit) separat oder integriert in die Plastifiziereinrichtung sein.

Bevorzugt handelt es sich bei der Formgebungseinrichtung um ein Spritzgießwerkzeug bzw. weist ein Spritzgießwerkzeug auf. Das Spritzgießwerkzeug ist bevorzugt mehrteilig (besonders bevorzugt zweiteilig oder, beispielsweise bei Etagenwerkzeugen - etwa für Dünnwandverpackungen **-,** dreiteilig). Bevorzugt handelt es sich bei dem formgebenden Herstellen um ein Spritzgussverfahren.

Daneben kann die Vorrichtung weitere Fördereinrichtungen (als Produktionseinrichtung der Vielzahl von Produktionseinrichtungen) zum Einbringen von Ausgangsstoffen in den Herstellungsprozess und/oder (wenigstens) eine Aufbereitungseinrichtung zum Aufbereiten von Ausgangsstoffen (wie etwa den zu verarbeitenden Kunststoff) umfassen.

Zusätzlich oder alternativ kann die Vorrichtung eine Auswerfeinrichtung (als eine Produktionseinrichtung der Vielzahl von Produktionseinrichtungen) aufweisen, welche das bzw. die in der Formgebungseinrichtung geformten Kunststoffformteil(e) (nach deren Formvorgang) von der Formgebungseinrichtung ablöst bzw. herauslöst. So kann die Auswerfeinrichtung (ausgestaltet etwa als Auswerferplatte) nach einem Öffnungsvorgang der Formgebungseinrichtung alle in der Formgebungseinrichtung geformten Kunststoffformteile (bevorzugt gleichzeitig) aus der Formgebungseinrichtung auswerfen (indem beispielsweise mechanisch Druck auf die einzelnen Kunststoffformteile ausgeübt wird).

Zusätzlich oder alternativ kann die Vorrichtung eine Abführeinrichtung zum Abführen von (fertig) hergestellten Kunststoffformteilen aus der Formgebungseinrichtung und/oder von einem Sammelbehältnis, in welchem die Kunststoffformteile nach deren Herstellung gesammelt werden, (als Produktionseinrichtung der Vielzahl von Produktionseinrichtungen) aufweisen.

Zusätzlich oder alternativ kann die Vorrichtung eine Inspektionseinrichtung (als eine Produktionseinrichtung der Vielzahl von Produktionseinrichtungen) aufweisen, welche die (fertig) hergestellten Kunststoffformteile auf Fehler hin inspiziert.

Die Vielzahl von Produktionseinrichtungen umfasst dabei bevorzugt wenigstens zwei, bevorzugt wenigstens drei, bevorzugt wenigstens vier Produktionseinrichtungen, welche jeweils ausgewählt sind aus einer Gruppe von Produktionseinrichtungen, welche eine Kunststoffzuführungseinrichtung zur Zuführung des zu verarbeitenden Kunststoffs (als Rohmaterial bzw. welcher bevorzugt als Rohmaterial vorliegt), eine Plastifiziereinrichtung zur Plastifizierung und/oder Homogenisierung des zu verarbeitenden Kunststoffs, bevorzugt eine Einspritzeinrichtung zum Einspritzen des plastifizierten und/oder homogenisierten Kunststoffs in wenigstens eine Formgebungseinrichtung und/oder die wenigstens eine Formgebungseinrichtung zum Formen des eingespritzten Kunststoffs zu einem Kunststoffformteil, eine Fördereinrichtung zum Einbringen von Ausgangsstoffen in den Herstellungsprozess, eine Aufbereitungseinrichtung zum Aufbereiten von Ausgangsstoffen (wie etwa den zu verarbeitenden Kunststoff), Auswerfeinrichtung, eine Abführeinrichtung (umfassend ein Werkzeug, eine Automation und/oder eine Robotik) zum Abführen von (fertig) hergestellten Kunststoffformteilen aus der Formgebungseinrichtung und/oder von einem Sammelbehältnis, eine Inspektionseinrichtung zur Inspektion der (fertig) hergestellten Kunststoffformteile auf Fehler hin und dergleichen sowie Kombinationen hiervon umfasst. Dabei kann die Einspritzeinrichtung (Einspritzeinheit) separat oder integriert in die Plastifiziereinrichtung sein.

Bevorzugt ist die Vorrichtung dazu geeignet und bestimmt, (nacheinander), eine Vielzahl (im Wesentlichen) gleicher (herzustellender) Kunststoffprodukte und/oder Kunststoffformteile herzustellen. Bevorzugt erfolgt die Herstellung der Kunststoffformteile (voll-)automatisch, also bevorzugt ohne manuelle Produktionsschritte und/oder ohne manuellen Eingriff, und besonders bevorzugt vollautomatisch, während höchstens eine Überwachung der Produktion durch einen Bediener erfolgt.

Denkbar ist, dass beispielsweise innerhalb einer Stunde wenigstens 1.000, bevorzugt wenigstens 10.000, bevorzugt wenigstens 11.000 (beispielsweise bei Dünnwandverpackungen als herzustellende Kunststoffformteile) bevorzugt wenigstens 50.000, bevorzugt wenigstens 65.000 (beispielsweise herzustellenden PET-Kunststoffformteilen), bevorzugt wenigstens 100.000 und besonders bevorzugt wenigstens 300.000 (gleicher) Kunststoffformteile mittels einer Vorrichtung und/oder genau einer Formgebungseinrichtung (welche etwa mehrere Kavitäten aufweisen kann) hergestellt werden können.

Bevorzugt weist die Vorrichtung in einem Produktionsbetrieb eine feste und/oder vorgegebene Zykluszeit auf. Bei der Zykluszeit handelt es sich um die Zeitspanne, welche die Vorrichtung, z.B. eine Spritzgießmaschine, benötigt, um ein Kunststoffformteil, z.B. ein Spritzgießteil, zu produzieren bzw. herzustellen (wobei während eines Produktionszyklus oft mehrere Kunststoffformteile mittels einer Vielzahl von Kavitäten in der Formgebungseinrichtung bzw. im Spritzgusswerkzeug gleichzeitig parallel gefertigt werden). Bevorzugt liegt die Zykluszeit in einem Bereich zwischen 0,5 Sekunden und 1 Minute, bevorzugt zwischen 0,5 Sekunden und 5 Sekunden, bevorzugt zwischen 1 Sekunde und 3 Sekunden, bevorzugt zwischen 1,5 Sekunden und 3 Sekunden, bevorzugt zwischen 1,5 Sekunden und 2,5 Sekunden und besonders bevorzugt zwischen 1,5 Sekunden und 2 Sekunden. Beispielsweise kann für die Herstellung von Verschlüssen für Wassergetränkeflaschen die Zykluszeit bei 1,9 Sekunden liegen.

Bevorzugt weist die Formgebungseinrichtung mehr als eine Kavität auf, so dass mehr als ein Kunststoffformteil in einem Produktionszyklus produziert wird. Bevorzugt weist die Formgebungseinrichtung (bevorzugt jede Formgebungseinrichtung der Vorrichtung) wenigstens zwei, bevorzugt wenigstens 32, bevorzugt wenigstens 64 und besonders bevorzugt wenigstens 128 (insbesondere gleiche) Kavitäten auf. Bevorzugt werden also in einem (jeden) einzelnen Produktionszyklus wenigstens zwei, bevorzugt wenigstens 32, bevorzugt wenigstens 64 und besonders bevorzugt wenigstens 128 (gleiche) Kunststoffformteile (mittels der einen Formgebungseinrichtung bzw. mittels des einen Spritzgusswerkzeugs) gleichzeitig bzw. parallel hergestellt. Bevorzugt weist die Formgebungseinrichtung (bevorzugt jede Formgebungseinrichtung der Vorrichtung) nicht mehr als 512, bevorzugt nicht mehr als 256 und besonders bevorzugt nicht mehr als 128 (gleiche) Kavitäten (zur gleichzeitigen und/oder parallelen Herstellung von Kunststoffformteilen während eines Produktionszyklus) auf.

Dabei ist die Vorrichtung und bevorzugt die Vielzahl von Produktionseinrichtungen gemäß einer vorgegebenen und/oder vorgebbaren Vielzahl von Produktionsablaufgrößen einstellbar, welche charakteristisch ist für den Produktionsablauf der herzustellenden Kunststoffprodukte.

Die vorgegebene Vielzahl von Produktionsablaufgrößen ist dabei bevorzugt auf einer (nichttemporären) Speichereinrichtung der Vorrichtung ablegbar. Bevorzugt handelt es sich bei der Speichereinrichtung um einen (festen) Bestandteil der Vorrichtung bzw. um eine interne Speichereinrichtung der Vorrichtung. Denkbar wäre aber auch, dass es sich bei der Speichereinrichtung etwa um eine (in Bezug auf die Vorrichtung) externe Speichereinrichtung, wie etwa eine Cloud-basierte Speichereinrichtung handelt.

Bevorzugt hängt die Vielzahl von Produktionsablaufgrößen von dem in der Vorrichtung (gerade) herstellbaren bzw. herzustellenden Kunststoffprodukt und/oder Kunststoff-Formteil ab. So kann die Einspritzmenge und/oder Einspritzgeschwindigkeit von Kunststoff in die Formgebungseinrichtung beispielsweise von der Größe und/oder Form des herzustellenden Kunststoffformteils abhängen.

Bevorzugt weist die Vorrichtung (wenigstens) eine Steuerungseinrichtung auf, welche die Vorrichtung und insbesondere die Vielzahl von Produktionseinrichtungen in Abhängigkeit der Produktionsablaufgrößen steuert. Die Produktionsablaufgrößen können sich dabei auf eine relative zeitliche Ansteuerung der zu steuernden Komponenten und/oder Maschinenteile der Vorrichtung innerhalb eines Produktionszyklus beziehen.

Bevorzugt wird durch die Vielzahl von Produktionsablaufgrößen ein zyklischer Ablauf der (Vielzahl von) Produktionseinrichtungen und/oder der anzusteuernden Komponenten und/oder Maschinenteile der Vorrichtung angegeben. Dabei wird der Ablauf bevorzugt einzelner Prozessschritte in Abhängigkeit von Produktionsablaufgrößen angegeben. Bevorzugt gibt die Vielzahl von Produktionsablaufgrößen auch eine Reihenfolgevorschrift und/oder zeitliche Korrelation für einzelne (von wenigstens einer Produktionseinrichtung und/oder Komponente und/oder von mehreren Produktionseinrichtungen und/oder Komponenten durchzuführenden) Prozessschritten der Vorrichtung (bevorzugt während eines Produktionszyklus) an.

Bei den (Maschinen-)Komponenten der Vorrichtung kann es sich beispielsweise um die Komponenten "Dosiereinheit" (etwa zum Dosieren einer Kunststoffschmelze bzw. des zu verarbeitenden Kunststoffs), "Schließeinheit (etwa Schließen der Formgebungseinrichtung)", "Einspritzachse", "Plastifiziereinrichtung (etwa Einspritzdüse)", "Ausstoßeinrichtung", "Einspritzanpressung (etwa Düsenanpressung)" und/oder Kernzug handeln. Produktionsablaufgrößen der Vielzahl von Produktionsablaufgrößen könne hierfür beispielsweise jeweils einen zeitlichen Verlauf der (jeweiligen) Achspositionen angeben.

Daneben können Produktionsablaufgrößen auch Produktionsparameter angeben, insbesondere Produktionsparameter, welche einen zeitlichen Einfluss auf einen Produktionsbetriebsablauf der Vorrichtung haben. Beispielsweise kann eine Produktionsablaufgröße eine Temperatur angeben, welche etwa für die Temperatur mit welcher ein Verfahrensschritt durchgeführt wird, charakteristisch ist. In Abhängigkeit der Temperatur kann sich beispielsweise ein zeitlicher Unterschied ergeben, ob eine Achse (etwa eine Spritzachse (Einspritzvorrichtung)) mit einer kleineren Geschwindigkeit (beispielsweise 50 mm/s) oder mit einer höheren Geschwindigkeit (beispielsweise 450 mm/s) gefahren werden muss. Auch ein Dosierungsvorgang des zu verarbeitenden Kunststoffs und/oder ein Einspritzvorgang (mittels der Einspritzvorrichtung) kann in einem kürzeren oder längeren Zeitintervall durchgeführt werden, was beispielsweise von einer (etwa als Produktionsablaufgröße vorgegebenen und- oder vorgebbaren) Umdrehungsgeschwindigkeit der Plastifiziereinrichtung (etwa Aufschmelzschnecke) und/oder dem Material des zu verarbeitenden Kunststoffs abhängen kann.

Bevorzugt ist wenigstens eine und besonders bevorzugt sind mehrere Produktionsablaufgrößen (der Vielzahl von Produktionsablaufgrößen) charakteristisch für wenigstens einen Produktionsprozessschritt, welcher ausgewählt sein kann aus einer Gruppe von Produktionsprozessschritten, welche einen Schließvorgang der Formgebungseinrichtung (etwa Spritzgießwerkzeug), ein Heranfahren bzw. Bewegen der Plastifiziereinrichtung, ein Heranfahren bzw. Bewegen der Einspritzeinrichtung, einen Einspritzvorgang der Einspritzeinrichtung, einen Nachdruckvorgang der Einspritz- und/oder Plastifiziereinrichtung, einen Kühlvorgang (zum Kühlen der Formgebungseinrichtung), einen Öffnungsvorgang der Formgebungseinrichtung, einen Auswerfvorgang der in der Formgebungseinrichtung geformten Kunststoffformteile (mittels der Ausstoßeinrichtung), eine Rückbewegung bzw. Bewegen der Plastifiziereinrichtung (Schneckenrückzug) und/oder der Einspritzeinrichtung, eine Dosierung einer Kunststoffschmelze bzw. des zu verarbeitenden Kunststoffs, ein Abheben der Plastifizier- und/oder Einspritzeinrichtung von der Formgebungseinrichtung (Werkzeug) und dergleichen sowie Kombinationen hiervon umfasst.

In jedem (nachfolgenden) Produktionszyklus wird der Betrieb der Vorrichtung bzw. der Produktionseinrichtungen gemäß dieser Vielzahl von Produktionsablaufgrößen gesteuert.

Die Vielzahl von Produktionsablaufgrößen ist dabei bevorzugt (von einem Bediener) mittels einer Bedienereingabe (zu deren Eingabe etwa eine Bedieneinrichtung bzw. eine Mensch-Maschinen-Schnittstelle an der Vorrichtung vorgesehen sein kann) vorgebbar und/oder änderbar.

Wenigstens eine Produktionsablaufgröße und bevorzugt mehrere Produktionsablaufgrößen (der Vielzahl von Produktionsablaufgrößen) können dabei für wenigstens eine Bewegungsgröße von beweglichen Teilen der Vorrichtung, beispielsweise der Auswerfeinrichtung, angeben.

Wenigstens eine Produktionsablaufgröße und bevorzugt mehrere Produktionsablaufgrößen (der Vielzahl von Produktionsablaufgrößen) kann/können eine Pufferzeit, welche nicht unmittelbar in die Zykluszeit eingeht (und somit nicht zykluszeitrelevant ist), einer Komponente der Vorrichtung, angeben.

Wenigstens eine Produktionsablaufgröße und bevorzugt mehrere Produktionsablaufgrößen (der Vielzahl von Produktionsablaufgrößen) kann eine Endzeit eines Produktionsprozessschritts angeben, zu welcher der Produktionsprozessschritt beendet sein muss (so dass etwa ein folgender oder nächstfolgender Produktionsprozessschritt eingeleitet werden kann).

Erfindungsgemäß wird eine Vielzahl von Produktionsablauf-Datensätzen zu, zur Herstellung von vorhergehenden und/oder vergangenen Ziel-Kunststoffformteilen realisierten und/oder bereits erfolgten Produktionsabläufen bereitgestellt. Diese Vielzahl von Produktionsablauf-Datensätzen kann beispielsweise von der (internen oder externen) Speichereinrichtung der Vorrichtung abgerufen werden.

Dabei wird auf Grundlage der Vielzahl von Produktionsablauf-Datensätzen und in Abhängigkeit wenigstens einer für das vorgegebene Ziel-Kunststoffformteil charakteristischen Ziel-Kunststoffformteilgröße wenigstens eine Produktionsablaufgröße und bevorzugt werden mehrere Produktionsablaufgrößen der Vielzahl von Produktionsablaufgrößen ermittelt.

Mit anderen Worten werden Produktionsablauf-Datensätzen zu bereits produzierten Kunststoffformteilen verwendet, um einen automatisch generierten Produktionsablauf zu einem bislang noch nicht hergestellten vorgegebenen Ziel-Kunststoffformteil zu ermitteln.

Die Anmelderin hat herausgefunden, dass das Ziel-Kunststoffteil schon einen starken Hinweis auf den verwendeten Kunststoff und die Werkzeugkonstruktion gibt. Bei manchen Teilen ist das aber variabler, hier könnte man bevorzugt mit einer Abfrage des Maschinenbedieners arbeiten.

Die Produktionsablauf-Datensätze beziehen sich dabei bevorzugt auf voneinander verschiedene (aber bereits hergestellte) Kunststoffprodukte. Jeweils ein Produktionsablauf-Datensatz bezieht sich dabei auf genau ein (bereits hergestelltes) Kunststoffprodukt bzw. Kunststoff-formteil. Der jeweilige Produktionsablauf-Datensatz ist dabei bevorzugt für jeweils einen (während der Herstellung vorgelegenen und/oder vorgegebenen) Produktionsablauf der Herstellung des jeweiligen Kunststoffprodukts bzw. Kunststoffformteils charakteristisch. Der Produktionsablauf-Datensatz kann sich dabei jeweils auf während eines Produktionszyklus gemessene Daten und/oder vorgegebene Steuergrößen handeln. Denkbar ist auch, dass der Produktionsablauf-Datensatz über mehrere Produktionszyklen gemittelte Daten enthält.

Mit anderen Worten wird vorgeschlagen, mit schon realisierten Produktionsabläufen einen Produktionsablauf automatisch für ein bislang noch nicht produziertes vorgegebenes Ziel-Kunststoffformteil zu erstellen.

Bei einem bevorzugten Verfahren handelt es sich bei dem Ziel-Kunststoffformteil um ein Kunststoffformteil, welches ausgewählt ist aus einer Gruppe, welche Medizintechnikprodukte und/oder Produkte für den Pharmabereich und/oder aus dem Healthcarebereich und/oder aus dem Medizinbereich, insbesondere Spritzen und/oder Pipettenspitzen und/oder Pipetten, Medizinprodukte aus dem Diagnostikbereich, Verschlüsse insbesondere für (Getränke-)Behältnisse (beispielsweise Tethered Caps), Kappen, Deckel für (Getränke-)Becher bzw. für Trinkbecher, Behältnisse, insbesondere Petrischalen und/oder Behältnisse für Analyseflüssigkeiten, Behältnisse für Milchprodukte (wie etwa Yoghurt), Dünnwandbehältnisse, und/oder (Getränke-)Becher, und/oder Verpackungen, insbesondere Dünnwandverpackungen, und/oder In-Mould-Labeling-Produkte und dergleichen sowie Kombinationen umfasst.

Bevorzugt handelt es sich bei dem Ziel-Kunststoffformteil um einen Massenartikel, welcher in hohen Stückzahlen von der Vorrichtung hergestellt wird.

Bei einem sogenannten "In-Mould-Labeling" (Abkürzung IML-Verfahren) handelt es sich um ein Etikettierverfahren für Kunststoffverpackungen, in welchem vorbedruckte Etiketten in das Spritzgießwerkzeug eingelegt werden.

Bevorzugt handelt es sich dabei bei den (besonders bevorzugt allen) vorhergehenden und/oder vergangenen Ziel-Kunststoffformteilen, zu welchen die Produktionsablauf-Datensätze bereitgestellt sind, um dieselbe Art von Kunststoffformteil (wie aus obiger Gruppe ausgewählt).

Bei der wenigstens einen Ziel-Kunststoffformteilgröße kann es sich um wenigstens einen Kunststoffformteilparameter (etwa Spritzgießteilparameter) und bevorzugt die Vielzahl an Kunststoffformteilparametern (etwa Spritzgießteilparametern) handeln, welcher bzw. welche bevorzugt ausgewählt sind aus einer Gruppe von Kunststoffformteilparametern (etwa Spritzgießteilparametern), welche eine Masse und/oder Gewicht des herzustellenden Kunststoffformteils (etwa Spritzgießteils) oder eine hierfür charakteristische Größe, eine Kristallinität um den Anguss des herzustellenden Kunststoffformteils (etwa Spritzgießteils) oder eine hierfür charakteristische Größe, ein Vorhandensein von Black Specks, eine Ausformung von Gewindeteilen oder eine hierfür charakteristische Größe, Form- und/oder Lagetoleranzen, Beschädigungen (wie Macken), charakteristische mechanische und/oder physikalische Größen wie Durchstoßfestigkeit, Schlagzähigkeit, Zugfähigkeit des herzustellenden Kunststoffformteils (etwa Spritzgießteils) oder hierfür charakteristische Größe(n), eine wirksame Fläche des herzustellenden Kunststoffformteils (etwa Spritzgießteils) und/oder eine wirksame Fläche der zur Herstellung des Kunststoffformteils (etwa Spritzgießteils) geeigneten Kavität oder eine hierfür charakteristische Größe, eine für eine Geometrie des herzustellenden Kunststoffformteils (etwa Spritzgießteils) charakteristische Größe, eine für ein Gewicht und/oder eine geometrische Erstreckung des herzustellenden Kunststoffformteils (etwa Spritzgießteils) charakteristische Größe und dergleichen sowie Kombinationen hiervon umfasst.

Dabei sind oder werden bevorzugt für das vorgegebene Ziel-Kunststoffformteil Daten, bevorzugt 3D-Daten, vorgegeben. Bevorzugt handelt es sich bei der wenigstens einen Ziel-Kunststoffformteilgröße um 3D-Daten des vorgegebenen Ziel-Kunststoffformteils. Denkbar ist aber auch, dass die Ziel-Kunststoffformteilgröße aus den 3D-Daten des vorgegebenen Ziel-Kunststoffformteils (automatisch etwa von der Vorrichtung und besonders bevorzugt von einer nachfolgend beschriebenen, insbesondere Prozessor-basierten, Produktionsablauf-Ermittlungseinrichtung der Vorrichtung) abgeleitet wird.

Bevorzugt wird die wenigstens eine Ziel-Kunststoffformteilgröße von einem Bediener bzw. über eine Bedienereingabe vorgegeben.

Dabei kann die wenigstens eine Ziel-Kunststoffformteilgröße schriftlich oder mündlich (von dem Bediener) eingegeben werden.

Denkbar ist aber auch, dass die wenigstens eine Ziel-Kunststoffformteilgröße mittels einer Sensorerfassungseinrichtung (etwa Kamera und/oder 3D-Scan-Einrichtung) beispielsweise der Vorrichtung über Auswertung der von der Sensorerfassungseinrichtung von dem vorgegebenen Ziel-Kunststoffformteil und/oder einen Prototypen für das vorgegebene Ziel-Kunststoffformteil (etwa ein 3D-Druck-Teil) erfassten Sensordaten ermittelt wird.

Bei einem weiter bevorzugten Verfahren bezieht sich die bereitgestellte Vielzahl von Produktionsablauf-Datensätzen auf die Herstellung von vorhergehenden und/oder vergangenen (bereits hergestellten) Ziel-Kunststoffformteilen, welche aus derselben Produktgattung stammen wie das vorgegebene Ziel-Kunststoffformteil. Dies bietet den Vorteil, dass bereits Daten zu Produktionsabläufen bereitgestellt werden/sind, welche ähnlich herzustellende Ziel-Kunststoffformteile betreffen, welche ähnliche Eigenschaften aufweisen. Dadurch sind oftmals auch bereits die Produktionsabläufe ähnlich zu dem zu erstellenden Produktionsablauf, so dass eine schnellere bzw. weniger rechenaufwändige Erstellung erreicht werden kann.

Bei einem weiter bevorzugten Verfahren ist/wird die bereitgestellte und/oder bereitzustellende Vielzahl von Produktionsablauf-Datensätzen in Abhängigkeit wenigstens einer Ziel-Kunststoffformteilgröße ausgewählt und/oder bereitgestellt, welche ausgewählt ist aus einer Gruppe umfassend eine Querschnittsform, Querschnittsflächen, Abmessungen, Gewicht, geometrische Größen, Material, Verwendungszweck, Wiederverwendbarkeit, eine (etwa äußere) Ausgestaltungsform (des Ziel-Kunststoffformteils), wie etwa 3D-Daten des Ziel-Kunststoffformteils, Volumen, Wandstärke, Außen- und/oder Innenoberflächengröße, und dergleichen sowie Kombinationen hiervon. Alternativ oder zusätzlich kann die bereitgestellte und/oder bereitzustellende Vielzahl von Produktionsablauf-Datensätzen in Abhängigkeit wenigstens einer obig angegebenen Ziel-Kunststoffformteilgröße ausgewählt und/oder bereitgestellt sein und/oder werden.

So kann etwa nach (im Querschnitt) runden und/oder rechteckigen herzustellenden und/oder hergestellten Verpackungen (als Ziel-Kunststoffformteil) unterschieden werden. Die Vielzahl bereitgestellter Produktionsablauf-Datensätze bezieht sich dabei bevorzugt ebenfalls lediglich auf runde oder rechteckige hergestellte Verpackungen.

Bevorzugt werden bei der Ermittlung der wenigstens einen Produktionsablaufgröße auf Grundlage der Vielzahl von Produktionsablauf-Datensätzen in Abhängigkeit der Ziel-Kunststoffformteilgröße Kunststoffformteil-Größen berücksichtigt, welche für die jeweils vorhergehenden Ziel-Kunststoffformteile charakteristisch sind, auf deren Produktionsablauf zur Herstellung sich der jeweilige Produktionsablauf-Datensatz bezieht. Beispielsweise kann es sich bei dieser Kunststoffformteil-Größe(n) ebenfalls um (eine) (obig beschriebene) Ziel-Kunststoffformteilgröße(n) handeln, welche wenigstens eine für das vorhergehende Ziel-Kunststoffformteil charakteristische Eigenschaft und/oder Größe angibt (etwa die 3-D Daten des Werkzeugs oder des Kunststoffteils). Da der Produktionsablauf des vorhergehenden Ziel-Kunststoffformteils bereits realisiert war, kann/können als Kunststoffformteil-Größe(n) zusätzlich oder alternativ zur Ziel-Kunststoffformteilgröße tatsächlich bei der Produktion des Ziel-Kunststoffformteils erhaltene bzw. dessen gemessene Größen und/oder Eigenschaften verwendet werden (die 3D-Form des produzierten Ziel-Kunststoffformteils könnte etwa auch gemessen werden und 3D-Daten hierzu bestimmt werden).

Den Produktionsablauf-Datensätzen der Vielzahl von Produktionsablauf-Datensätzen kann dabei (jeweils) wenigstens eine (solche) Kunststoffformteil-Größe (bevorzugt mehrere) zugeordnet sein. Zusätzlich oder alternativ können die Produktionsablauf-Datensätze der Vielzahl von Produktionsablauf-Datensätzen (jeweils) wenigstens eine (solche) Kunststoffformteil-Größe (bevorzugt mehrere) umfassen. Durch eine solche Zuordnung oder eine solche enthaltene Angabe der Kunststoffformteil-Größe, ist bevorzugt die Information zugeordnet/enthalten, welches Ziel-Kunststoffformteil durch den bereitgestellten (für einen realisierten Produktionsablauf charakteristischen) Produktionsablauf-Datensatz hergestellt werden sollte und/oder welches hergestellt wurde.

Diese Informationen bzw. die Kunststoffformteil-Größen können bevorzugt zur Auswahl und/oder Bereitstellung und/oder Verwendung der Vielzahl von Produktionsablauf-Datensätze verwendet werden, welche bei der Ermittlung der wenigstens einen Produktionsablaufgröße und bevorzugt bei der Ermittlung mehrerer Produktionsablaufgrößen berücksichtigt werden. Hierdurch werden etwa nur Produktionsablauf-Datensätze verwendet/berücksichtigt, mithilfe derer zu dem herzustellenden vorgegebenen Ziel-Kunststoffformteil ausreichend ähnliche vorhergehende Ziel-Kunststoffformteile hergestellt wurden.

Zusätzlich oder alternativ wird die wenigstens eine Produktionsablaufgröße und bevorzugt werden die mehreren Produktionsablaufgrößen in Abhängigkeit dieser Kunststoffformteil-Größen ermittelt (insbesondere indem bei deren Ermittlung nur Produktionsablauf-Datensätze zu ausgewählten Kunststoffformteil-Größen berücksichtigt werden).

Bei einem weiter bevorzugten Verfahren ist/wird die bereitgestellte und/oder bereitzustellende Vielzahl von Produktionsablauf-Datensätzen in Abhängigkeit wenigstens einer Ziel-Kunststoffformteilgröße ausgewählt und/oder bereitgestellt, welche eine Applikation (bzw. Anwendung) des vorgegebenen Ziel-Kunststoffformteils angibt. Hierunter kann beispielsweise eine bestimmte Applikation wie PET-Preforms und/oder Verschlüsse für Getränkebehältnisse (für Stillwasser und/oder Kohlensäurehaltige Getränke), medizinische Artikel (Disposables oder Mehrwegartikel), und/oder Dünnwandartikel und/oder Verpackung oder eine Herstellung nach einem speziellen Verfahren (Schäumen, Spritzprägen oder dergleichen) zu verstehen sein.

Bevorzugt umfasst auch die bereitgestellte und/oder bereitzustellende Vielzahl von Produktionsablauf-Datensätzen jeweils für die entsprechende Applikation charakteristische Daten, so dass der jeweilige Datensatz dieser Applikation zugeordnet werden kann bzw. gemäß einer vorgegebenen Applikation (zu dessen Bereitstellung im Rahmen einer Vielzahl von Produktionsablauf-Datensätze) ausgewählt werden kann.

Bei einem bevorzugten Verfahren werden als bereitgestellte Vielzahl von Produktionsablauf-Datensätze Daten verwendet, welche von der Vorrichtung (mittels welcher das vorgegebene Ziel-Kunststoffformteil hergestellt werden soll) erhobene Daten umfassen und/oder aus diesen (eigenen) erhobenen Daten bestehen. Denkbar ist auch, dass Produktionsablauf-Datensätze verwendet werden, welche auf Grundlage von in wenigstens einer und bevorzugt mehreren verschiedenen (bevorzugt baugleichen) Vorrichtungen erhobenen Daten erzeugt wurden/sind.

So könnte es sich beispielsweise um eine verschiedene Vorrichtung desselben Betreibers der Vorrichtung handeln. Beispielsweise könnten Produktionsablauf-Datensätze verwendet werden, welche auf Grundlage von, von einer in früheren Jahren verwendeten Vorrichtungen desselben Betreibers, erzeugt wurden. Dies bietet den Vorteil, dass bereits in kurzer Zeit eine hohe Zahl an Produktionsablauf-Datensätzen zur Verfügung stehen und der Produktionsprozess bzw. der Produktionsablauf bereits zu Beginn an den jeweiligen Betreiber-spezifischen Produktionsbetrieb bzw. dessen Komponenten angepasst werden kann. Dadurch können vorteilhaft in früheren Vorrichtungen gewonnene Erfahrungen bzw. Erkenntnisse unmittelbar nach Aufnahme des Produktionsbetriebs einer neuen Vorrichtung weiter genutzt werden.

Denkbar ist aber auch, dass Produktionsablauf-Datensätze (insbesondere ausschließlich und/oder als Teil der bereitgestellten Vielzahl von Produktionsablauf-Datensätzen) verwendet werden können, welche auf Grundlage von Daten erzeugt sind/wurden, welche von wenigstens einer Vorrichtung und bevorzugt einer Vielzahl von (bevorzugt baugleichen) Vorrichtungen von dem Betreiber der (gegenständlichen) Vorrichtung verschiedenen Betreiber(n) erhoben wurden/sind. Dies bietet den Vorteil, dass beispielsweise mehrere verschiedene vorteilhafte Möglichkeiten eines Produktionsablaufs abbildbar sind und Betreiber-unabhängige Produktionsabläufe ermittelbar sind.

Dabei liegen die Produktionsablauf-Datensätze und/oder die zur Erzeugung der Produktionsablauf-Datensätze verwendeten Daten bevorzugt in anonymisierter und/oder pseudonymisierter Form vor, so dass die verwendeten Daten nicht auf einen spezifischen Betreiber und/oder auf eine spezifische Vorrichtung zurückführbar sind.

Bei einem weiter bevorzugten Verfahren wird die wenigstens eine Produktionsablaufgröße und bevorzugt die Vielzahl von Produktionsablaufgrößen mittels eines Produktionsablauf-Modell maschinellen Lernens ermittelt, welches einen Satz Parameter umfasst, welche auf Werte eingestellt sind, die als Ergebnis eines Trainingsprozesses gelernt wurden, in welchem als Trainingsdaten die (bereitgestellte) Vielzahl von Produktionsablauf-Datensätzen zu bereits erfolgten Produktionsabläufen für vorhergehende/vergangene, bevorzugt verschiedene, (bereits hergestellte) Ziel-Kunststoffformteile verwendet wurden. Bevorzugt werden also obig beschriebene und/oder nachfolgend näher beschriebene Ausführungsformen der Produktionsablauf-Datensätze als Trainingsdaten bzw. als Trainingsdatensätze verwendet.

Bevorzugt umfassen die Produktionsablauf-Datensätze für das (zugehörige) Kunststoffprodukt bzw. Kunststoffformteil charakteristische Daten, wie beispielsweise 3-D Daten des Werkzeugs und/oder des Kunststoffformteils. Daneben können die (als Trainingsdaten verwendete) Produktionsablauf-Datensätze Werte für eine oder mehrere der obig genannten Kunststoffformteilgrößen, welche für das herzustellende/hergestellte Kunststoffprodukt bzw. Kunststoffformteil charakteristisch ist, umfassen.

Bevorzugt basiert das Produktionsablauf-Modell maschinellen Lernens auf einem (künstlichen) neuronalen Netzwerk. Bevorzugt ist das neuronale Netzwerk als tiefes neuronales Netzwerk (Deep Neural Network, DNN), bei dem die parametrierbare Verarbeitungskette eine Mehrzahl von Verarbeitungsschichten aufweist, und/oder ein sogenanntes Convolutional Neural Network (CNN) (dt. Faltungsnetzwerk) und/oder ein rekurrentes Neuronales Netzwerk (RNN, engl. Recurrent Neural Network) und/oder als ein Feedforward Neuronales Netz und/oder als GAN (Abkürzung für engl. "Generative Adversarial Network") ausgebildet.

Bevorzugt kann, etwa durch eine schriftliche oder mündliche Eingabe der Anforderungen an den Produktionsablauf (des vorgegebenen Ziel-Kunststoffformteils) mit anderen Worten mittels eines trainierten neuronalen Netzwerks automatisch ein Produktionsablauf (für das vorgegebene Ziel-Kunststoffformteil) erstellt werden. Dabei wurde das Netzwerk initial mit schon realisierten Produktionsabläufen trainiert. Der erstellte (Produktions-)Ablauf beinhaltet bevorzugt alle nötigen Komponenten, Kommandos, Hilfssteuerungen sowie deren Parametrierung.

Bevorzugt werden dem zu trainierenden Produktionsablauf-Modell bzw. dem zu trainierenden (künstlichen) neuronalen Netzwerk die Vielzahl von Produktionsablauf-Datensätze oder hiervon abgeleitete Größen zum Training zugeführt. Diese Produktionsablauf-Datensätze können, wie obig beschrieben, beispielsweise 3D-Daten der (damaligen) vorhergehend hergestellten Kunststoffformteile umfassen oder diesen jeweils zugeordnet sein (im Rahmen derer Herstellung die jeweiligen Produktionsablauf-Datensätze erzeugt bzw. ermittelt wurden).

In einer bevorzugten Ausführungsform dient als wenigstens eine Eingangsgröße des, insbesondere (fertig) trainierten, Produktionsablauf-Modells die wenigstens eine Ziel-Kunststoffformteilgröße, wobei bevorzugt als Ziel-Kunststoffformteilgröße 3D-Daten des Werkzeugs und/oder des herzustellenden, vorgegebenen Zielkunststoffteils verwendet wird. Bevorzugt bildet das Produktionsablauf-Modell maschinellen Lernens die wenigstens eine Eingangsgröße auf die wenigstens eine (zu ermittelnde), insbesondere zur Herstellung des vorgegebenen Ziel-Kunststoffformteils zu verwendende Produktionsablaufgröße oder eine hierfür charakteristische Größe ab und/oder das Produktionsablauf-Modell maschinellen Lernens gibt als Ausgangsgröße(n) die wenigstens eine (zu ermittelnde), insbesondere zur Herstellung des vorgegebenen Ziel-Kunststoffformteils zu verwendende Produktionsablaufgröße oder eine hierfür charakteristische Größe(n) (bevorzugt an einen Bediener) aus.

Bevorzugt dient (mit anderen Worten) als Eingangsgröße des, insbesondere (fertig) trainierten, Produktionsablauf-Modells bzw. des, insbesondere (fertig) trainierten, neuronalen Netzwerks die wenigstens eine Ziel-Kunststoffformteilgröße (welche für das herzustellende, vorgegebene Ziel-Kunststoffformteil charakteristisch ist). Wie obig erläutert, kann es sich bei dieser Ziel-Kunststoffformteilgröße beispielsweise um 3D-Daten eines für die Herstellung des vorgegebenen Ziel-Kunststoffformteils zu verwendenden Werkzeugs und/oder um 3D-Daten des herzustellenden, vorgegebenen Ziel-Kunststoffformteils handeln.

Bevorzugt bildet das Produktionsablauf-Modell bzw. das künstliche neuronale Netzwerk die wenigstens eine Eingangsgröße und bevorzugt die Eingangsgrößen in Abhängigkeit einer parametrierbaren Verarbeitungskette auf (wenigstens eine) Ausgangsgröße(n) ab.

Bevorzugt ist/sind als Ausgangsgröße(n) wenigstens eine (obig oder nachfolgend näher beschrieben) Produktionsablaufgröße oder eine hierfür charakteristische Größe(n) gewählt. Bevorzugt ist als Ausgangsgrößen eine Vielzahl von (obig oder nachfolgend näher beschrieben) Produktionsablaufgrößen und besonders bevorzugt alle Produktionsablaufgrößen eines Produktionsablaufs bzw. zum Betreiben der Vorrichtung zur Herstellung des Ziel-Kunststoffformteils gewählt.

Beispielsweise kann/können als Ausgangsgröße(n) eine für eine Einspritzgeschwindigkeit und/oder für eine Prozesszeit eines Produktionsprozessschritts oder für mehrere Prozesszeiten wenigstens eines Produktionsprozessschritts und/oder für einen Druck oder hierfür charakteristische Größe(n) gewählt sein.

Bei einem weiter bevorzugten Verfahren handelt es sich bei dem Trainingsprozess um überwachtes Lernen.

Bevorzugt ist das Produktionsablauf-Modell dazu geeignet und bestimmt, als Ausgangsgrößen kontinuierliche Variablen auszugeben (etwa Werte für Prozesszeiten, Drücke, Geschwindigkeiten, Achspositionen, und dergleichen).

Dabei kann es sich bei dem Produktionsablauf-Modell bevorzugt um ein Deep-Learning-Modell, eine Support Vector Machine (SVM), ein k-Nächste-Nachbarn-Modell (KNN) und/oder um ein Bayessches Modell handeln.

Bevorzugt wird das Produktionsablauf -Modell mittels bestärkendem Lernen (englisch: reinforcement learning) trainiert. Mit anderen Worten kann hier ein sogenannter Reinforcement-Learning-Agent verwendet werden, um das zu Grunde liegende Produktionsablauf -Modell, insbesondere fortlaufend, zu trainieren. Die als Trainingsdaten vorgegebenen Trainingsdatensätze können beispielsweise die obig genannten Trainingsdatensätze sein oder solche umfassen.

Für das bestärkende Lernen ist insbesondere eine Belohnungsfunktion vorgegeben, durch die beispielsweise eine Maximierung der Performanz des Produktionsablauf-Modells belohnt wird.

Bevorzugt verwendet das Produktionsablauf-Modell einen Reinforcement-Learning Agenten, zur Ermittlung einer Steuergröße für ein Steuerungsverfahren und/oder Regelungsverfahren eines (etwa obig genannten) Produktionsprozessschritts, wobei der Agent zur Exploration einer Umgebung des Agenten, also zur Erforschung der Umgebung durch Aktionen abweichend der besten dem Agenten bekannten Aktionen, geeignet und bestimmt ist, wobei der Agent eine Explorationsrate ermittelt und/oder entscheidet, ob eine weitere Exploration durchgeführt wird.

Bevorzugt erkundet der Agent im Allgemeinen seine Umgebung, um eine bessere Bewertung des Zustandsraums vornehmen zu können. Eine Exploration und/oder ein Explorationsbetrag bzw. eine Belohnung ("Reward") kann dabei in Abhängigkeit einer (weiteren), etwa mündlichen und/oder schriftlichen, Nutzereingaben erfolgen, mit welchen eine Bedienperson als Nutzer die vorgeschlagene Steuerung und/oder Regelung übersteuert und/oder ändern möchte.

Bei einem weiter bevorzugten Verfahren ist die wenigstens eine Produktionsablaufgröße und bevorzugt die Vielzahl von Produktionsablaufgrößen ausgewählt aus einer Gruppe von Produktionsablaufgrößen, welche Größen umfasst, die charakteristisch ist/sind für wenigstens eine Komponente der Vorrichtung, Kommandos bzw. Kommandofunktion(-en), Steuerungseinrichtungen und/oder Parameter der Vorrichtung und dergleichen sowie Kombinationen hierfür. Dies bietet den Vorteil, dass die (gesamten) zum Betreiben der Vorrichtung erforderlichen (Steuer- und/oder Einstell-)Daten, welche vormals von dem Bediener zu erstellen/zu erzeugen waren und der Vorrichtung vorgegeben wurden, automatisch erzeugt werden können.

Bei einem Kommando bzw. einer Kommandofunktion handelt es sich um wenigstens einen Steuerbefehl und/oder eine Abfolge von Steuerbefehlen, mittels welche eine Komponente und/oder wenigstens eine Produktionseinrichtung, bevorzugt zur Durchführung wenigstens eines Produktionsprozessschrittes, insbesondere der zeitliche Ablauf des Produktionsprozessschrittes gesteuert wird. Bei dem Kommando bzw. der Kommandofunktion kann es sich um Pseudocode bzw. um einen Code, welcher erst noch vor dessen Ausführung durch ein Maschinenteil in Maschinensprache kompiliert werden muss, oder um (bereits) maschinenlesbaren Code (Maschinensprache) handeln. Diese Kommandos bzw. Kommandofunktionen berücksichtigen dabei bevorzugt bereits Ansteuergrößen wie zeitliche Abfolgen von Achspositionen, Geschwindigkeiten, Druck, Temperatur, Prozesszeiten und dergleichen.

Bei einem weiter bevorzugten Verfahren ist die ermittelte Vielzahl von Produktionsablaufgrößen für den gesamten Produktionsablauf charakteristisch.

Bei einem weiter bevorzugten Verfahren ist die wenigstens eine ermittelte Produktionsablaufgröße oder die ermittelte Vielzahl von Produktionsablaufgrößen durch Bedienereingaben änderbar.

Bei einem weiter bevorzugten Verfahren ist die wenigstens eine ermittelte Produktionsablaufgröße oder die ermittelte Vielzahl von Produktionsablaufgrößen durch eine Chat-Interaktion (etwa Generative AI) mit einem Bediener, bevorzugt mittels Spracheingabe und/oder Texteingabe durch den Bediener, änderbar und/oder erweiterbar und/oder verfeinerbar. Hierdurch kann bevorzugt eine sehr bedienerfreundliche Änderungsmöglichkeit bzw. Verfeinerbarkeit oder Anpassung ermöglicht werden. Bevorzugt kann man mit anderen Worten den erstellten Entwurf durch Chat-Interaktion (Generative AI) erweitern und/oder verfeinern.

Bei einem weiter bevorzugten Verfahren wird wenigstens eine von einem Bediener zu optimierende Produktionsablaufgröße zur Ausgabe an den Bediener ermittelt. So kann beispielsweise das Produktionsablauf-Modell eine Varianz für eine Ausgangsgröße und/oder eine Prädiktionswahrscheinlichkeit oder hierfür charakteristische Größe ermitteln und/oder ausgeben. Anhand dieser Größen kann ermittelt werden, ob bei einer Ausgabegröße eine vergleichsweise hohe Wahrscheinlichkeit einer Optimierbarkeit gegeben ist.

Bei einem weiter bevorzugten Verfahren wird die wenigstens eine von dem Bediener zu optimierende Produktionsablaufgröße zusammen mit wenigstens einem Grenzwert an den Bediener ausgegeben, mittels welchem (dem Bediener) ein Optimierungsbereich für die zu optimierende Produktionsablaufgröße angegeben wird. Das System ist mit anderen Worten bevorzugt auch in der Lage, eine Hilfestellung zu leisten und/oder Optimierungsvorschläge zu unterbreiten (und mittels einer Ausgabeeinrichtung der Vorrichtung an den Bediener auszugeben).

Bei einem weiter bevorzugten Verfahren ist durch die ermittelte Vielzahl von Produktionsablaufgrößen eine Reihenfolge durch die Vorrichtung vorzunehmender Produktionsschritte festlegbar und/oder ist/wird festgelegt.

Bei einem weiter bevorzugten Verfahren ist wenigstens eine Testfunktion und/oder sind mehrere Testfunktionen vorgegeben und/oder vorgebbar, mittels welchen eine Realisierbarkeit eines auf Grundlage der ermittelten Vielzahl von Produktionsablaufgrößen festgelegten und/oder festzulegenden Produktionsablauf automatisch überprüfbar sind und/oder überprüft wird.

So kann etwa zwingende zeitliche Abfolge bzw. Reihenfolge vorgegebener Produktionsprozessschritte überprüft werden. Eine derartige zwingende zeitliche Abfolge bzw. Reihenfolge und/oder wenigstens eine Testfunktion kann dabei fest vorgegeben sein. Denkbar ist aber auch, dass ein Bediener eine derartige zwingende zeitliche Abfolge bzw. Reihenfolge und/oder wenigstens eine Testfunktion vorgibt.

Eine Testfunktion kann dabei auch überprüfen, ob Prozessparameter und/oder Produktionsablaufgrößen einen zwingenden und/oder vorgegebenen Wertebereich einhalten.

Bevorzugt muss ein Bediener vor einem Betrieb der Vorrichtung auf Grundlage der ermittelten Produktionsablaufgrößen eine Einstellung der Produktionsablaufgrößen freigeben.

Bevorzugt handelt es sich bei wenigstens einer Produktionsablaufgröße und bevorzugt bei mehreren Produktionsablaufgrößen (der Vielzahl von Produktionsablaufgrößen) um jeweils einen Produktionsparameter, welche jeweils für wenigstens einen Produktionsprozessschritt der Vorrichtung charakteristisch sind.

Bei einem Produktionsparameter handelt es sich bevorzugt um eine von einer Bedienperson (insbesondere an der Bedieneinrichtung) der Vorrichtung vorgebbare Größe, in Abhängigkeit welcher der wenigstens eine Produktionsprozessschritt steuerbar und/oder regelbar ist.

Der wenigstens eine Produktionsparameter und bevorzugt die Vielzahl an Produktionsparametern kann dabei ausgewählt sein aus einer Gruppe von Produktionsparametern, welche eine Schließkraft eines Werkzeugs einer Spritzgießmaschine, eine Ziel-Atmung eines Werkzeugs der Spritzgießmaschine, eine Säulendehnung, eine Heiztemperatur oder Heizleistung an der Plastifizierung der Spritzgießmaschine, eine Heizleistung eines Heizelements (zum Erwärmen des zur Herstellung des Spritzgießteils verwendeten Materials), eine Verarbeitungstemperatur des bzw. der zum Herstellen der von der Spritzgießmaschine herzustellenden Spritzgießteilen verwendeten Ausgangsstoffs bzw. Ausgangsstoffe, eine (Soll-)Einspritzgeschwindigkeit und/oder einen Einspritzdruck und/oder ein Einspritzvolumen des zur Herstellung der Spritzgießteile verwendeten Materials in die jeweiligen Kavitäten, eine (Soll-)Einspritzarbeit, wenigstens eine für das zur Herstellung der Spritzgießteile verwendete Material charakteristische Materialgröße (etwa Zusammensetzung eines Kunststoffs, Rezyklatanteil), ein Drehmoment und/oder eine Rotationsgeschwindigkeit einer Plastifizierschnecke und/oder eines Antriebsmotors der Plastifizierschnecke oder eine hierfür charakteristische Größe, ein Förderverhalten des zur Herstellung der Spritzgießteile verwendeten Materials (Granulat, Pulver, Flakes und dergleichen) oder eine hierfür charakteristische Größe, wie ein Reibungsbeiwert oder eine Schüttdichte, eine für ein Förderverhalten der in einer Plastifizierschnecke entstehenden Schmelze charakteristische Größe wie rheologische Grössen, z.B. Viskosität des Kunststoffs, eine für eine (Soll-)Kühltemperatur und/oder Kühlleistung eines Werkzeugs charakteristische Größe, Werkzeuginnendrücke der Schmelze in der Kavität, Temperaturen der Werkzeugoberfläche in der Kavität, ein Systemdruck einer Grundversorgung einer hydraulischen Komponente der Spritzgießmaschine, ein Inspektionsparameter einer (insbesondere der Spritzgießmaschine nachgeschalteten) optischen Inspektionsvorrichtung zum Inspizieren des hergestellten Spritzgießteils (insbesondere zur Ermittlung einer für eine Güte des Spritzgeißteils und/oder des Produktionsprozesses charakteristischen Größe), für eine Trocknung (etwa des zur Herstellung des Spritzgießteils zu verwendende Material, wie Kunststoffgranulat) charakteristische Trocknungsgröße und/oder eine für eine Kühlung des hergestellten Spritzgießteils charakteristische Größe und dergleichen sowie Kombinationen hiervon umfasst.

Dabei können sich die Produktionsparameter auf Parameter des Produktionsprozesses der Vorrichtung (etwa Spritzgießmaschine) und/oder einer weiteren Maschine (wie etwa eine in Kommunikation mit der Maschinensteuerung (MES, Abkürzung für Manufacturing Execution System) stehende periphere Anlage der Spritzgießmaschine) beziehen.

Bevorzugt umfasst die Vielzahl an Produktionsablauf-Datensätze auch wenigstens einen und bevorzugt mehrere (derartige) Produktionsparameter.

Bevorzugt handelt es sich bei wenigstens einer Ausgangsgröße und/oder bei der wenigstens einen Prozessablaufgröße um wenigstens einen und bevorzugt mehrere (derartige) Produktionsparameter.

Zusätzlich oder alternativ kann es sich bei wenigstens einer Produktionsablaufgröße und bevorzugt bei mehreren Produktionsablaufgrößen (der Vielzahl von Produktionsablaufgrößen) um wenigstens einen und bevorzugt eine Vielzahl von Maschinenparameter(n) handeln, welche für wenigstens eine Vorrichtung und/oder eine (eingesetzte und/oder einzusetzende) Komponente der Vorrichtung charakteristisch sind.

Bevorzugt umfasst die Vielzahl an Produktionsablauf-Datensätze auch wenigstens einen und bevorzugt mehrere (derartige) Maschinenparameter.

Bevorzugt handelt es sich bei wenigstens einer Ausgangsgröße und/oder bei der wenigstens einen Prozessablaufgröße um wenigstens einen und bevorzugt mehrere (derartige) Maschinenparameter.

Der wenigstens eine Maschinenparameter und bevorzugt die Vielzahl an Maschinenparameter kann dabei ausgewählt sein aus einer Gruppe von Maschinenparametern, welche eine Anzahl an aktuell zur Herstellung der Spritzgießteile verwendeten und/oder einsatzbereiten Kavitäten der Produktionszelle, eine Anzahl an maximal zur Herstellung der Spritzgießteile verwendbaren Kavitäten der Produktionszelle, ein Alter, die Werkzeugkonfiguration bei Spritzgiessmaschinen mit wechselbaren Einsätzen, ein Alter, eine Schusszahl und/oder einen Wartungszustand der zur Herstellung der Spritzgießteile verwendeten Werkzeuge und/oder Maschinen und/oder Maschinenteile, einen Maschinentyp und/oder Werkzeugtyp der zur Herstellung der Spritzgießteile verwendeten Werkzeuge und/oder Maschinen und/oder Maschinenteile, insbesondere eine (Bau-)Art einer Plastifizierschnecke, Zahl und Strömungsquerschnitt der Entlüftungskanäle einer Kavität des Spritzgiesswerkzeugs, Art des Kühlmediums zur Kühlung des in der Spritzgießmaschine verwendeten Werkzeugs (z.B. Wasser/Öl)), Anzahl der Plastifizierungen, Anzahl der Kernzüge und dergleichen sowie Kombinationen hiervon umfasst.

Die Auswahl des wenigstens einen Maschinenparameters bzw. der Vielzahl an Maschinenparametern (insbesondere aus obiger Gruppe) kann dabei von der Applikation bzw. (beabsichtigten) Anwendung abhängen. Je nachdem, welches Kunststoffformteil hergestellt, etwa Spritzgießteil gespritzt, wird, können die Maschinenparameter variieren. Es können daher für verschiedene Arten herzustellender Kunststoffformteile (etwa Spritzgießteile) verschiedene Maschinenparameter vorgegeben (und/oder vorgebbar) sein. Bevorzugt sind wenigstens zwei, bevorzugt wenigstens drei verschiedene Arten von herzustellenden Kunststoffformteilen (etwa Spritzgießteilen) vorgegeben und diesen Arten ist jeweils wenigstens ein Maschinenparameter und bevorzugt eine Vielzahl von Maschinenparametern zugeordnet.

Bevorzugt umfasst die Vielzahl an Produktionsablauf-Datensätze auch wenigstens einen und bevorzugt mehrere (derartige) für eine Applikation (bzw. Anwendung) des vorhergehenden bzw. vergangenen (hergestellten) Ziel-Kunststoffformteils angibt.

Bevorzugt erfolgt eine Auswahl der bereitzustellenden Vielzahl von Produktionsablauf-Datensätze in Abhängigkeit der in den jeweiligen Produktionsablauf-Datensätze angegebenen Applikation des vorhergehenden bzw. vergangenen (hergestellten) Ziel-Kunststoffformteils. Bevorzugt werden nur Produktionsablauf-Datensätze zur Bereitstellung der Vielzahl von Produktionsablauf-Datensätzen ausgewählt, welche dieselbe Applikation (wie obig erläutert, beispielsweise PET-Preforms, medizinische Artikel, Getränkeverschlüsse und/oder Dünnwandartikel) aufweisen wie das vorgegebene Ziel-Kunststoffformteil.

Zusätzlich oder alternativ können die Produktionsablauf-Datensätze wenigstens einen und bevorzugt eine Vielzahl von Kunststoffformteilparameter(n) (etwa Spritzgießteilparameter(n)) umfassen, welche(r) für das jeweilige vergangene und/oder vorhergehende (bereits hergestellte) Kunststoffformteil (etwa Spritzgießteil) charakteristisch ist/sind. Damit kann eine Auswahl der bereitzustellenden Vielzahl von Produktionsablauf-Datensätze erleichtert/beschleunigt werden.

Zusätzlich oder alternativ können die Produktionsablauf-Datensätze (jeweils) eine Vielzahl von, von wenigstens einer Sensoreinrichtung der Maschine und/oder der Produktionszelle gemessenen Sensordaten und bevorzugt von einer Vielzahl von Sensoreinrichtungen der Maschine und/oder der Produktionszelle gemessenen Sensordaten oder hiervon abgeleiteten Daten umfassen. Denkbar ist, dass hieraus beispielsweise zu überwachende Sensordaten(-werte) als Ausgangsgröße(n) und/oder als (zu ermittelnde) Produktionsablaufgröße ermittelt bzw. abgeleitet werden.

Bei den Produktionsablaufgrößen kann es sich zudem um zu überwachende Sensordaten bzw. Sensordatenbereiche handeln. Die (zu überwachenden Werte für) Sensordaten können bzw. kann dabei ausgewählt sein aus einer Gruppe von Sensordaten, welche eine (Ist-)Temperatur wenigstens eines Bereichs und bevorzugt einer Vielzahl von Bereichen eines Werkzeugs der Spritzgießmaschine, eine (Ist-)Temperatur wenigstens eines Bereichs und bevorzugt einer Vielzahl von Bereichen entlang der Plastifizierschnecke, einen Einspritzdruck und/oder eine Einspritzgeschwindigkeit oder hierfür charakteristische Größen, eine Schließkraft, eine Schliessgeschwindigkeit oder auch eine Beschleunigung beim Schliessen eines Werkzeugs der Spritzgießmaschine oder eine hierfür charakteristische Größe, eine Viskosität des zur Herstellung der Spritzgießteile verwendeten Materials oder eine hierfür charakteristische Größe, eine für eine Atmung des Werkzeugs der Spritzgießmaschine charakteristische Größe wie die Säulendehnung, eine (basierend auf Sensordaten ermittelte) Einspritzarbeit, ein (Ist-)Drehmoment und/oder Rotationsgeschwindigkeit einer Plastifizierschnecke und/oder eines Antriebsmotors der Plastifizierschnecke oder eine hierfür charakteristische Größe, ein Widerstand beim Einspritzvorgang (welcher etwa von einem Querschnitt der Entlüftungskanäle der jeweiligen Kavität der Spritzgießmaschine abhängt), eine Vorlauf- und/oder Rücklauftemperatur eines Kühlmediums zum Kühlen des zur Herstellung der Spritzgießteile verwendeten Werkzeugs der Spritzgießmaschine, eine Strömungsgeschwindigkeit des Kühlmediums, eine für eine Umgebungsbedingung charakteristische Größe, wie Umgebungstemperatur, Luftfeuchte oder Höhe, eine für eine Eigenschaft der Ausgangsstoffe charakteristische Größe, wie Granulatfeuchte oder Granulattemperatur, eine für eine Eigenschaft der fertiggestellten Spritzgießteile charakteristische (etwa durch eine Inspektions- und/oder Prüfvorrichtung ermittelte), (Inspektions- und/oder Prüf-)Größe (wie Masse oder physikalische Eigenschaften), eine Plastifizierleistung oder eine hierfür charakteristische Größe, eine thermische und/oder stoffliche Homogenisierleistung oder eine hierfür charakteristische Größe, ein für ein Förderverhalten des zur Herstellung der Spritzgießteile verwendeten Materials in einem Zuführbereich der Plastifizierschnecke, eine für ein Kompressionsverhalten des zur Herstellung der Spritzgießteile verwendeten Materials in der Plastifizierschnecke charakteristische Kompressionsgröße, eine für einen Werkzeuginnendruck charakteristische Werkzeuginnendruckgröße, und dergleichen angeben sowie Kombinationen hiervon umfasst.

Zusätzlich oder alternativ können die Produktionsablauf-Datensätze wenigstens einen und bevorzugt eine Vielzahl von maschineninternen Parameter(n) umfassen.

Zusätzlich oder alternativ kann es sich bei der wenigstens einen (zu ermittelnden) Produktionsablaufgröße und bevorzugt bei mehreren (zu ermittelnden)Produktionsablaufgrößen (der Vielzahl von Produktionsablaufgrößen) um wenigstens einen und bevorzugt eine Vielzahl von maschineninternen Parameter(n) handeln, welche für eine maschineninterne Steuer- und/oder Messgröße charakteristisch ist.

Dabei handelt es sich bei den maschineninternen Parametern insbesondere um Parameter, welche (üblicherweise) nicht von einem Benutzer eingestellt und/oder überwacht werden, welche aber die Maschinensteuerung zur Steuerung und/oder Regelung der Produktion ermittelt.

Beispielsweise kann es sich bei einem maschineninternen Parameter um einen (internen) Parameter der Temperaturregelung wie beispielsweise Totzeit und/oder eine Steilheit bezüglich einer Reglerflanke (Temperatur/Zeit) und/oder ein Einspritzdruck und/oder einen Effektivdruck beim Einspritzprozess (des zur Herstellung des Spritzgießteils verwendeten Materials in die Kavität der Spritzgießmaschine) handeln.

Zusätzlich oder alternativ können die Produktionsablauf-Datensätze wenigstens einen Maschinenzustand und bevorzugt eine Vielzahl von Maschinenzuständen der Vorrichtung umfassen.

Zusätzlich oder alternativ kann es sich bei wenigstens einer Produktionsablaufgröße und bevorzugt bei mehreren Produktionsablaufgrößen (der Vielzahl von Produktionsablaufgrößen) um wenigstens einen Maschinenzustand und bevorzugt eine Vielzahl von Maschinenzuständen der Vorrichtung handeln.

Ein Maschinenzustand kann dabei ausgewählt sein aus einer Gruppe von Maschinenzuständen, welche einen Fehlerzustand, eine Alterung, einen Reinigungszustand (etwa Zeitpunkt der letzten Reinigung oder dergleichen, oder etwa festgestellte Ablagerung in einem Entlüftungskanal) und/oder Wartungszustand, einen Status eines Heizelements, einen Produktionszustand, eine Fehleranfälligkeit und dergleichen sowie Kombinationen hiervon umfasst.

Zusätzlich oder alternativ ist möglich, dass die Art und/oder Anzahl und/oder Auswahl von verschiedenen (etwa obig genannten) Parametern/Daten der jeweiligen Produktionsablauf-Datensätze und/oder Produktionsablaufgrößen und/oder in Bezug auf das vorgegebene Ziel-Kunststoffformteil zu ermittelnde/ermittelte Ziel-Kunststoffformteilgröße(n) (etwa Applikation, Ziel-Kunststoffformteilgröße(n), Produktionsparametern, Kunststoffformteilparameter (Spritzgießteilparameter), Maschinenparameter, Sensordaten, maschineninterne Parameter, Maschinenzustand, und dergleichen), welche bevorzugt zur Erzeugung eines Produktionsablaufdatensatzes verwendet werden können bzw. zu verwenden sind und insbesondere daher (zur Erzeugung eines Produktionsablaufdatensatzes und/oder Trainingsdatensatzes) zu erheben sind, automatisch (etwa von der Produktionsablauf-Ermittlungseinrichtung) vorgenommen wird.

Beispielsweise können hierfür eine Vielzahl von Daten zu obig genannten Parametern erhoben und (bevorzugt zusammen mit einem Zeitstempel) abgelegt werden. Die Datensätze können sodann mittels Mustererkennung und/oder Erkennung von Abweichungen und/oder Anomalien und/oder mittels Clusteranalyse (etwa mittels einem k-Means-Algorithmus) ausgewertet werden. So können etwa Cluster/Muster von Parametern/Größen ermittelt werden, in welchen diese Parameter Werte aus bestimmten Wertebereichen annehmen, und bei welchen etwa Werte der Produktionsablaufgröße(n) zu erhöhten/vorgegebenen Wahrscheinlichkeiten auftreten. Auf diese Weise können zu häufige/übliche Parameter(-Konstellationen) für eine Vielzahl von (zu ermittelnden) Produktionsablaufgrößen ermittelt werden.

Diese ermittelten Produktionsablaufgrößen bzw. Parameter können sodann zur Erzeugung der bereitzustellenden Vielzahl von Produktionsablauf-Datensätze und/oder Trainingsdatensätze und sodann zur Erzeugung der Trainingsdaten verwendet bzw. (automatisch) vorgegeben werden.

Bevorzugt werden zur Erzeugung der Produktionsablauf-Datensätze hierzu verwendeten Daten (beispielsweise Produktionsparametern, Spritzgießteilparameter, Maschinenparameter, Sensordaten, maschineninterne Parameter, Maschinenzustand, ...), bevorzugt wiederholt und besonders bevorzugt in (insbesondere vorgebbaren) regelmäßigen Zeitabschnitten, auf einer nicht-flüchtigen Speichereinrichtung (der Vorrichtung) abgelegt (und hiervon zum Erzeugen einer bereitzustellenden Vielzahl an Produktionsablauf-Datensätze abgerufen).

Bevorzugt wird ein (Erheben und/oder eine Ermittlung und) Ablegen der zur Erzeugung der der Produktionsablauf-Datensätze und/oder zur Erzeugung der bereitzustellenden Vielzahl von Produktionsablauf-Datensätze (als Trainingsdatensatz) zu verwendenden Daten auf der nicht-flüchtigen Speichereinrichtung (einer bzw. der Vorrichtung) durch eine Nutzereingabe einer Bedienperson (als Bediener) ausgelöst. Für die Nutzereingabe charakteristische Nutzereingabedaten (etwa die Art der Nutzereingabe) werden bevorzugt ebenfalls (auf der nicht-flüchtigen Speichereinrichtung) abgelegt und den (zum selben Zeitpunkt bzw. in einem gleichen Zeitraum erhobenen) Daten zugeordnet. Aus diesen Daten kann sodann ein Trainingsdatensatz (mit zu einem gemeinsamen Zeitstempel zugeordneten Daten) gebildet werden. Dies bietet den Vorteil, dass die Produktionsablauf-Datensätze auf Grundlage von Daten eines Betriebs der Vorrichtung ermittelt werden können, welche einen besonders einwandfreien und störungsfreien und etwa Energie-effizienten Betrieb der Vorrichtung oder aus Sicht der Bedienperson vorteilhaften Betrieb abbilden.

Denkbar ist auch, dass in einem (vorgegebenen und/oder vorgebbaren) Zeitraum vor dem Zeitpunkt der Nutzereingabe und/oder nach dem Zeitpunkt der Nutzereingabe erhobene Daten in Bezug auf die Parameter (zu welchen Daten zur Erzeugung eines Produktionsablaufdatensatzes bzw. Trainingsdatensatzes zu erheben sind) ebenfalls abgelegt und zur weiteren Datenanalyse und/oder zur Erzeugung eines Produktionsablaufdatensatzes bzw. Trainingsdatensatzes verwendet werden, so dass vorteilhaft ein zeitlicher Verlauf der Werte der entsprechenden Parameter abbildbar ist.

Bevorzugt ist einstellbar und/oder vorgebbar und/oder vorgegeben, welche Daten (der obig genannten Parameter, also etwa Produktionsparametern, Spritzgießteilparameter, Maschinenparameter, Sensordaten, maschineninterne Parameter, Maschinenzustand) erhoben und/oder zur Erzeugung der Produktionsablauf-Datensätze bzw. Trainingsdatensätze verwendet werden. Dies kann etwa von einem Hersteller der Vorrichtung, etwa Spritzgießmaschine, vorgegeben sein. Denkbar ist aber auch, dass dies von einer Bedienperson (als Benutzer) vorgebbar und/oder einstellbar ist.

Zusätzlich oder alternativ ist als Ausgangsgröße wenigstens eine Größe gewählt, welche für eine Stellgröße für eine Steuerung und/oder Regelung eines Produktionsprozessschritts, etwa des Erwärmungsverfahrens des zur Herstellung der Spritzgießteile zu verwendenden Materials mittels einer Ansteuerung wenigstens eines Heizelements und/oder des Kompressionsverfahrens und/oder Förderverfahrens des zur Herstellung der Spritzgießteile zu verwendenden Materials und/oder einer Betätigung und/oder eines Schließvorgangs einer Öffnung (etwa des Werkzeugs zur Herstellung der Spritzgießteile) insbesondere via eines Stell- und/oder Schrittmotors, und/oder des Kühlverfahrens zum Kühlen des zur Herstellung der Spritzgießteile zu verwendenden Werkzeugs, und/oder einem (bevorzugt der obig genannten) Produktionsparameter charakteristische ist.

Denkbar ist auch, dass (zusätzlich) als Ausgangsgröße wenigstens ein Maschinenzustand und/oder eine für eine Wartung und/oder einen Fehlerzustand der Vorrichtung charakteristische Größe gewählt ist.

Die Vorrichtung, bzw. Spritzgießmaschine ist dabei bevorzugt so konstruiert und/oder eingerichtet und bestimmt, dass die Formgebungseinrichtung (das Werkzeug) und die Plastifizierung bzw. die Plastifiziereinrichtung und/oder eine Komponente wechselbar (und etwa an andere herzustellende Designs der Ziel-Kunststoffformteile anpassbar) sind und/oder unterschiedliche Peripheriegeräte angeschlossen werden können. Dabei beinhaltet eine Formgebungseinrichtung (etwa Werkzeug) und/oder ein Peripheriegerät und/oder eine Komponente oftmals mehrere Aktoren und Sensoren, welche durch die Vorrichtung (etwa Spritzgießmaschine) betrieben werden müssen. Dabei können die Aktoren bestimmte Teile linear, rotatorisch oder in anderer Weise antreiben, wobei man jeweils von Antriebsachsen spricht.

Bevorzugt umfasst der (jeder) Produktionsablaufdatensatz für die eingesetzten/verwendeten (wechselbaren) Formgebungseinrichtungen (das Werkzeug) und die Plastifizierung bzw. die Plastifiziereinrichtung und/oder Komponenten und/oder Antriebsart charakteristische Größen.

Bevorzugt wird als Ausgangsgröße und/oder als wenigstens eine Produktinosablaufgröße eine einzuwechselnde Formgebungseinrichtung (das Werkzeug) und die Plastifizierung bzw. die Plastifiziereinrichtung und/oder eine Komponente der Vorrichtung ermittelt und/oder eine auszuwählende und/oder einzustellende Antriebsart (einer Antriebsachse einer Komponente) ausgewählt.

Die vorliegende Erfindung ist weiterhin gerichtet auf eine Produktionsablauf-Ermittlungseinrichtung zur wenigstens teilautomatischen, bevorzugt vollautomatischen, Ermittlung wenigstens einer Produktionsablaufgröße zur Herstellung eines vorgegebenen Ziel-Kunststoffformteils mittels einer Vorrichtung, insbesondere Spritzgießmaschine, zum formgebenden Herstellen von Kunststoffformteilen.

Dabei weist die Vorrichtung eine Vielzahl von Produktionseinrichtungen (bevorzugt zur Durchführung von, insbesondere voneinander verschiedenen Produktionsprozessschritten) auf, umfassend eine Kunststoffzuführungseinrichtung zur Zuführung des zu verarbeitenden Kunststoffs als Rohmaterial, eine Plastifiziereinrichtung zur Plastifizierung und/oder Homogenisierung des zu verarbeitenden Kunststoffs, eine Einspritzeinrichtung zum Einspritzen des plastifizierten und/oder homogenisierten Kunststoffs in wenigstens eine Formgebungseinrichtung und/oder die wenigstens eine Formgebungseinrichtung zum Formen des eingespritzten Kunststoffs zu einem Kunststoffformteil aufweist.

Dabei ist die Vorrichtung und/oder die Vielzahl von Produktionseinrichtungen gemäß einer vorgegebenen und/oder vorgebbaren Vielzahl von Produktionsablaufgrößen einstellbar, welche charakteristisch ist für den Produktionsablauf der herzustellenden Kunststoffprodukte.

Erfindungsgemäß ist der Produktionsablauf-Ermittlungseinrichtung eine Vielzahl von Produktionsablauf-Datensätzen zu, zur Herstellung von vorhergehenden Ziel-Kunststoffformteilen realisierten Produktionsabläufen bereitgestellt.

Dabei ist die Produktionsablauf-Ermittlungseinrichtung dazu geeignet und bestimmt, auf Grundlage der Vielzahl von Produktionsablauf-Datensätzen und in Abhängigkeit wenigstens einer für das vorgegebene Ziel-Kunststoffformteil charakteristischen Ziel-Kunststoffformteil-größe wenigstens eine Produktionsablaufgröße und bevorzugt mehrere Produktionsablaufgrößen der Vielzahl von Produktionsablaufgrößen zu ermitteln.

Es wird also auch im Rahmen der erfindungsgemäßen Produktionsablauf-Ermittlungseinrichtung vorgeschlagen, dass schon realisierte Produktionsabläufe zur Ermittlung eines Produktionsablaufs eines bislang noch nicht hergestellten Ziel-Kunststoffformteils verwendet werden.

Bevorzugt kann die Produktionsablauf-Ermittlungseinrichtung obig im Zusammenhang mit dem Verfahren zur wenigstens teilautomatischen, bevorzugt vollautomatischen, Ermittlung wenigstens einer Produktionsablaufgröße zur Herstellung eines vorgegebenen Ziel-Kunststoffformteils beschriebene Merkmale der Produktionsablauf-Ermittlungseinrichtung einzeln oder in Kombination mehrerer Merkmale aufweisen.

Bevorzugt ist die Produktionsablauf-Ermittlungseinrichtung dazu eingerichtet, geeignet und/oder bestimmt, das obig beschriebene Verfahren zur wenigstens teilautomatischen, bevorzugt vollautomatischen, Ermittlung wenigstens einer Produktionsablaufgröße zur Herstellung eines vorgegebenen Ziel-Kunststoffformteils sowie alle bereits obig im Zusammenhang mit dem Verfahren beschriebene Verfahrensschritte einzeln oder in Kombination miteinander auszuführen. Umgekehrt kann das Verfahren mit allen im Rahmen der Produktionsablauf-Ermittlungseinrichtung beschriebenen Merkmalen einzeln oder in Kombination miteinander ausgestattet sein.

Die vorliegende Erfindung ist weiterhin gerichtet auf eine Vorrichtung, insbesondere Spritzgießmaschine, zum formgebenden Herstellen von Kunststoffformteilen, wobei die Vorrichtung eine Vielzahl von Produktionseinrichtungen umfassend eine Kunststoffzuführungseinrichtung zur Zuführung des zu verarbeitenden Kunststoffs als Rohmaterial, eine Plastifiziereinrichtung zur Plastifizierung und/oder Homogenisierung des zu verarbeitenden Kunststoffs, eine Einspritzeinrichtung zum Einspritzen des plastifizierten und/oder homogenisierten Kunststoffs in wenigstens eine Formgebungseinrichtung und/oder die wenigstens eine Formgebungseinrichtung zum Formen des eingespritzten Kunststoffs zu einem Kunststoffformteil aufweist, wobei die Vorrichtung und/oder die Vielzahl von Produktionseinrichtungen gemäß einer vorgegebenen und/oder vorgebbaren Vielzahl von Produktionsablaufgrößen einstellbar ist, welche charakteristisch ist für den Produktionsablauf der herzustellenden Kunststoffprodukte.

Erfindungsgemäß ist und/oder wird wenigstens eine Produktionsablaufgröße der vorgegebenen und/oder vorgebbaren Vielzahl von Produktionsablaufgrößen entsprechend einer Produktionsablaufgröße eingestellt und/oder einstellbar, welche durch ein obig beschriebenes Verfahren (bevorzugt nach wenigstens einer bevorzugten Ausführungsform) ermittelt ist und/oder durch eine obig beschriebene Produktionsablauf-Ermittlungseinrichtung ermittelt ist.

Bevorzugt werden/sind mehrere und besonders bevorzugt alle Produktionsablaufgrößen durch ein obig beschriebenes Verfahren (bevorzugt nach wenigstens einem vorhergehenden einer bevorzugten Ausführungsform) ermittelt.

Bevorzugt umfasst die Vorrichtung die Produktionsablauf-Ermittlungseinrichtung gemäß einer obig beschriebenen Ausführungsform.

Bevorzugt kann die Vorrichtung alle obig im Zusammenhang mit dem Verfahren zur wenigstens teilautomatischen, bevorzugt vollautomatischen, Ermittlung wenigstens einer Produktionsablaufgröße zur Herstellung eines vorgegebenen Ziel-Kunststoffformteils beschriebene Merkmale der Vorrichtung einzeln oder in Kombination mehrerer Merkmale aufweisen.

Die vorliegende Erfindung ist weiterhin gerichtet auf einen Betrieb einer obig beschriebenen Vorrichtung, wobei der Betrieb gemäß wenigstens einer Produktionsablaufgröße erfolgt, welche durch ein obig beschriebenes Verfahren (bevorzugt nach wenigstens einem vorhergehenden einer bevorzugten Ausführungsform) ermittelt ist und/oder durch eine obig beschriebene Produktionsablauf-Ermittlungseinrichtung (bevorzugt gemäß einer bevorzugten Ausführungsform) ermittelt ist. Bevorzugt werden mehrere und besonders bevorzugt alle Produktionsablaufgrößen durch ein obig beschriebenes Verfahren (bevorzugt nach wenigstens einem vorhergehenden einer bevorzugten Ausführungsform) ermittelt und/oder durch eine obig beschriebene Produktionsablauf-Ermittlungseinrichtung ermittelt.

Die vorliegende Erfindung ist weiterhin gerichtet auf ein Computerprogramm oder Computerprogrammprodukt, umfassend Programmmittel, insbesondere einen Programmcode, welcher zumindest einige der und bevorzugt alle Verfahrensschritte des erfindungsgemäßen Verfahrens zur Ermittlung der wenigstens einen Produktionsablaufgröße und bevorzugt eine der beschriebenen bevorzugten Ausführungsformen repräsentiert oder kodiert und zum Ausführen durch eine Prozessoreinrichtung ausgebildet ist.

Die vorliegende Erfindung ist weiterhin gerichtet auf einen Datenspeicher, auf welchem zumindest eine Ausführungsform des erfindungsgemäßen Computerprogramms oder eine bevorzugte Ausführungsform des Computerprogramms gespeichert ist.

Die vorliegende Erfindung wurde in Bezug auf die Herstellung von Kunststoffformteile beschrieben. Dabei ist die vorliegende Erfindung auch übertragbar auf Verfahren und Vorrichtungen zur Herstellung von Kunststoffbehältnissen (etwa im Rahmen von Umformprozessen). Die Anmelderin behält sich vor, hierauf gerichtete Gegenstände ebenfalls zu beanspruchen.

Weitere Vorteile und Ausführungsformen ergeben sich aus den beigefügten Zeichnungen:
Darin zeigen:
- Fig. 1: eine schematische Darstellung einer erfindungsgemäßen Vorrichtung zum formgebenden Herstellen von Kunststoffformteilen gemäß einer bevorzugten Ausführungsform, hier ausgestaltet als Spritzgießmaschine; und
- Fig. 2: eine schematische Darstellung zur Veranschaulichung des erfindungsgemäßen Verfahrens zur wenigstens teilautomatischen Ermittlung wenigstens einer Produktionsablaufgröße zur Herstellung eines vorgegebenen Ziel-Kunststoffformteils gemäß einer bevorzugten Ausführungsform.

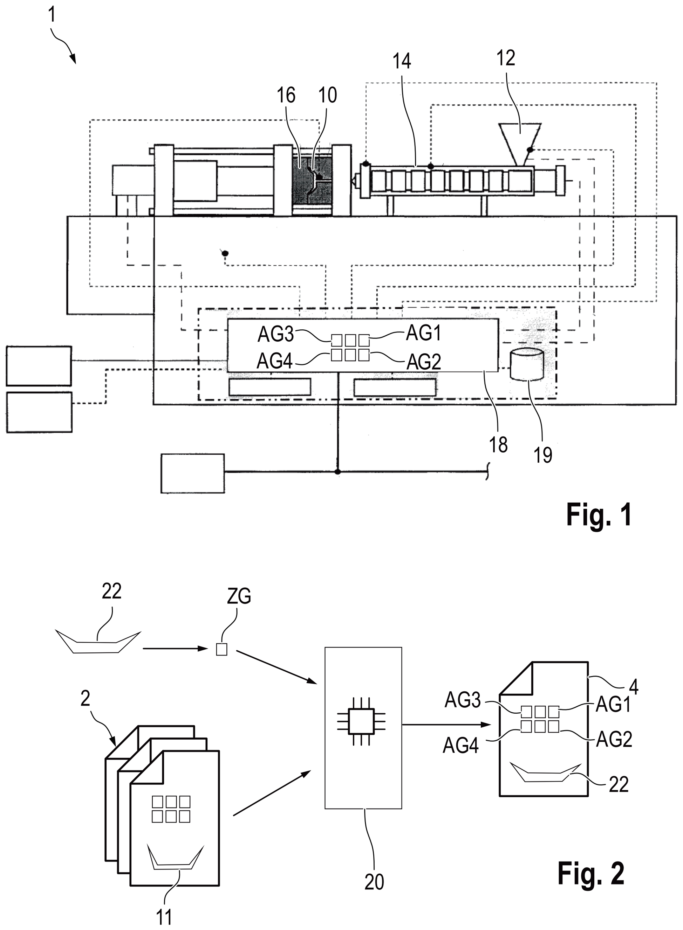

Fig. 1 zeigt eine schematische Darstellung einer erfindungsgemäßen Vorrichtung 1 zum formgebenden Herstellen von Kunststoffformteilen 10 gemäß einer bevorzugten Ausführungsform, hier ausgestaltet als Spritzgießmaschine.

Die Vorrichtung 1 ist bevorzugt dazu geeignet und bestimmt, eine Vielzahl (im Wesentlichen) gleicher Kunststoffprodukte bzw. Kunststoffformteile insbesondere nach dem Abbild eines vorgegebenen Kunststoffformteils 10 bzw. eines Modells eines vorgegebenen Kunststoffformteils 10 herzustellen.

Insbesondere ist die Vorrichtung 1 zum Urformen von Kunststoff-Formteilen 10 aus Kunststoff (als Rohmaterial) geeignet und bestimmt.

Dabei weist die Vorrichtung 1 eine Vielzahl von, insbesondere einander wenigstens teilweise verschiedenen, Produktionseinrichtungen 12, 14, 16 auf. Bevorzugt umfasst die Vielzahl von Produktionseinrichtungen 12, 14, 16 eine Kunststoffzuführungseinrichtung 12 zur Zuführung des zu verarbeitenden Kunststoffs (als Rohmaterial), eine Plastifiziereinrichtung 14 zur Plastifizierung und/oder Homogenisierung des zu verarbeitenden Kunststoffs, eine Einspritzeinrichtung zum Einspritzen des plastifizierten und/oder homogenisierten Kunststoffs in wenigstens eine Formgebungseinrichtung 16 und die wenigstens eine Formgebungseinrichtung 16 zum Formen des eingespritzten Kunststoffs zu einem Kunststoffformteil 10 aufweist.

Dabei ist die Vorrichtung 1 bzw. die Vielzahl von Produktionseinrichtungen 12, 14, 16 gemäß einer vorgebbaren Vielzahl von Produktionsablaufgrößen AG1, AG2, AG3, AG4, .. einstellbar ist, welche charakteristisch ist für den Produktionsablauf der herzustellenden Kunststoffprodukte 10.

Fig. 2 zeigt eine schematische Darstellung zur Veranschaulichung des erfindungsgemäßen Verfahrens gemäß einer bevorzugten Ausführungsform zur wenigstens teilautomatischen Ermittlung wenigstens einer Produktionsablaufgröße zur Herstellung eines vorgegebenen Ziel-Kunststoffformteils 22.

Dabei soll die Herstellung des vorgegebenen Ziel-Kunststoffformteils 22 mittels einer Vorrichtung 1 zum formgebenden Herstellen von Kunststoffformteilen, insbesondere einer Spritzgießmaschine erfolgen, wie sie etwa in Fig. 1 beschrieben und dargestellt ist. Die Vorrichtung 1 ist bevorzugt dazu geeignet und bestimmt, eine Vielzahl (im Wesentlichen) gleicher Kunststoffprodukte bzw. Kunststoffformteile insbesondere nach dem Abbild eines vorgegebenen Kunststoffformteils 10 bzw. eines Modells eines vorgegebenen Kunststoffformteils 10 herzustellen.

Das Bezugszeichen 18 kennzeichnet eine Steuerungseinrichtung der Vorrichtung 1 (als Maschinensteuerung), welche dazu geeignet und bestimmt ist, den (voll-)automatischen Herstellungsprozess der Vielzahl von Kunststoffformteilen zu steuern. Bevorzugt ist die Steuerungseinrichtung 18 dazu geeignet und bestimmt, die Vielzahl von Produktionseinrichtungen 12, 14, 16 zu steuern.

Dabei kann eine Vielzahl von Produktionsablaufgröße AG1, AG2, AG3, AG4 vorgegeben sein, und die Steuerung der Herstellungsschritte bzw. des Produktionsablaufs bzw. die Steuerung der Vorrichtung 1 und/oder der Vielzahl von Produktionseinrichtungen 12, 14, 16 erfolgt in Abhängigkeit der Vielzahl von Produktionsablaufgröße AG1, AG2, AG3, AG4.

Die Vorrichtung 1 kann eine Speichereinrichtung 19 aufweisen, auf welcher beispielsweise die Vielzahl von Produktionsablaufgröße AG1, AG2, AG3, AG4 abgelegt sein kann.

Fig. 2 illustriert, dass zur Ermittlung wenigstens einer Produktionsablaufgröße und bevorzugt zur Ermittlung der Vielzahl von Produktionsablaufgrößen AG1, AG2, AG3, AG4 eine Vielzahl von Produktionsablauf-Datensätzen 2 bereitgestellt werden.

Die Vielzahl von Produktionsablauf-Datensätzen 2 bezieht sich dabei auf zur Herstellung von vorhergehenden Ziel-Kunststoffformteilen 11 realisierten/bereits erfolgten Produktionsabläufen.

Insbesondere werden also initial schon realisierte Produktionsabläufe 2 vorgegeben.

Auf Grundlage der Vielzahl von Produktionsablauf-Datensätzen 2 und in Abhängigkeit wenigstens einer für das vorgegebene Ziel-Kunststoffformteil 22 charakteristischen Ziel-Kunststoffformteilgröße ZG wird wenigstens eine Produktionsablaufgröße AG1 und bevorzugt mehrere (besonders bevorzugt alle) Produktionsablaufgrößen der Vielzahl von Produktionsablaufgrößen AG1, AG2, AG3, AG4 durch eine, insbesondere Prozessor-basierte, Produktionsablauf-Ermittlungseinrichtung 20 ermittelt.

Bevorzugt wird vorgeschlagen, dass durch eine schriftliche oder mündliche Eingabe der Anforderungen an den Produktionsablauf bevorzugt mittels eines trainierten neuronalen Netzes automatisch (durch die, insbesondere Prozessor-basierte, Produktionsablauf-Ermittlungseinrichtung 20) ein Produktionsablauf erstellt wird.

Das Netzwerk wurde bevorzugt dabei initial mit schon realisierten Produktionsabläufen 2 trainiert. Der erstellte bzw. ermittelte (Produktions-)Ablauf 4 beinhaltet dabei bevorzugt alle nötigen Komponenten, Kommandos, Hilfssteuerungen sowie deren Parametrierung.

Bevorzugt kann man den erstellten Entwurf dann durch Chat Interaktion (Generative AI) erweitern und verfeinern.

Bevorzugt ist das System auch in der Lage, Hilfestellung zu leisten und Optimierungsvorschläge zu unterbreiten.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung
- 2: Vielzahl von Produktionsablauf-Datensätzen
- 4: ermittelte Produktionsablauf
- 10: durch Vorrichtung 1 herstellbares Kunststoffformteil
- 11: vorhergehendes Ziel-Kunststoffformteil
- 12: Kunststoffzuführungseinrichtung
- 14: Plastifiziereinrichtung
- 16: Formgebungseinrichtung
- 18: Steuerungseinrichtung
- 19: Speichereinrichtung
- 20: Produktionsablauf-Ermittlungseinrichtung
- 22: Ziel-Kunststoffformteil
- AG1, AG2, AG3, AG4: Produktionsablaufgrößen
- ZG: Ziel-Kunststoffformteilgröße

## Patentansprüche

1. Verfahren zur wenigstens teilautomatischen, bevorzugt vollautomatischen, Ermittlung wenigstens einer Produktionsablaufgröße zur Herstellung eines vorgegebenen Ziel-Kunststoffformteils (22) mittels einer Vorrichtung (1), insbesondere Spritzgießmaschine, zum formgebenden Herstellen von Kunststoffformteilen (10), wobei die Vorrichtung (1) eine Vielzahl von Produktionseinrichtungen (12, 14, 16) umfassend eine Kunststoffzuführungseinrichtung (12) zur Zuführung des zu verarbeitenden Kunststoffs als Rohmaterial, eine Plastifiziereinrichtung (14) zur Plastifizierung und/oder Homogenisierung des zu verarbeitenden Kunststoffs, eine Einspritzeinrichtung zum Einspritzen des plastifizierten und/oder homogenisierten Kunststoffs in wenigstens eine Formgebungseinrichtung (16) und/oder die wenigstens eine Formgebungseinrichtung (16) zum Formen des eingespritzten Kunststoffs zu einem Kunststoffformteil aufweist, wobei die Vorrichtung (1) und/oder die Vielzahl von Produktionseinrichtungen (12, 14, 16) gemäß einer vorgegebenen und/oder vorgebbaren Vielzahl von Produktionsablaufgrößen einstellbar ist, welche charakteristisch ist für den Produktionsablauf der herzustellenden Kunststoffprodukte,
**dadurch gekennzeichnet, dass**
eine Vielzahl von Produktionsablauf-Datensätzen (2) zu, zur Herstellung von vorhergehenden Ziel-Kunststoffformteilen realisierten Produktionsabläufen bereitgestellt wird, und dass auf Grundlage der Vielzahl von Produktionsablauf-Datensätzen und in Abhängigkeit wenigstens einer für das vorgegebene Ziel-Kunststoffformteil charakteristischen Ziel-Kunststoffformteilgröße (ZG) wenigstens eine Produktionsablaufgröße (AG1) und bevorzugt mehrere Produktionsablaufgrößen der Vielzahl von Produktionsablaufgrößen (AG1, AG2, AG3, AG4) ermittelt wird bzw. werden.

2. Verfahren nach Anspruch 1,
es sich bei dem Ziel-Kunststoffformteil um ein Kunststoffformteil handelt, welches ausgewählt ist aus einer Gruppe, welche Medizintechnikprodukte und/oder Produkte für den Pharmabereich und/oder aus dem Healthcarebereich und/oder aus dem Medizinbereich, insbesondere Spritzen und/oder Pipettenspitzen und/oder Pipetten, Verschlüsse insbesondere für (Getränke-)Behältnisse, Kappen, Behältnisse, insbesondere Petrischalen und/oder Behältnisse für Analyseflüssigkeiten und/oder (Getränke-)Becher, und/oder Verpackungen, insbesondere Dünnwandverpackungen, und/oder In-Mould-Labeling-Produkte und dergleichen sowie Kombinationen umfasst.

3. Verfahren nach einem der vorangegangenen Ansprüche,
**dadurch gekennzeichnet, dass**
sich die bereitgestellte Vielzahl von Produktionsablauf-Datensätzen auf die Herstellung von vorhergehenden Ziel-Kunststoffformteilen bezieht, welche aus derselben Produktgattung stammen wie das vorgegebene Ziel-Kunststoffformteil.

4. Verfahren nach einem der vorangegangenen Ansprüche,
**dadurch gekennzeichnet, dass**
die bereitgestellte und/oder bereitzustellende Vielzahl von Produktionsablauf-Datensätzen in Abhängigkeit wenigstens einer Ziel-Kunststoffformteilgröße ausgewählt und/oder bereitgestellt ist/wird, welche ausgewählt ist aus einer Gruppe umfassend eine Querschnittsform, Querschnittsflächen, Abmessungen, Gewicht, geometrische Größen, Material, Verwendungszweck, Wiederverwendbarkeit, eine Form, Volumen, Wandstärke, Außen- und/oder Innenoberflächengröße, und dergleichen sowie Kombinationen hiervon.

5. Verfahren nach einem der vorangegangenen Ansprüche,
**dadurch gekennzeichnet, dass**
die wenigstens eine Produktionsablaufgröße und bevorzugt die Vielzahl von Produktionsablaufgrößen mittels eines Produktionsablauf-Modell maschinellen Lernens ermittelt wird, welches einen Satz Parameter umfasst, welche auf Werte eingestellt sind, die als Ergebnis eines Trainingsprozesses gelernt wurden, in welchem als Trainingsdaten die Vielzahl von Produktionsablauf-Datensätzen zu bereits erfolgten Produktionsabläufen für vorhergehende und/oder vergangene hergestellte Ziel-Kunststoffformteile verwendet wurden und/oder die wenigstens eine Produktionsablaufgröße und bevorzugt die Vielzahl von Produktionsablaufgrößen ausgewählt ist aus einer Gruppe von Produktionsablaufgrößen, welche Größen umfasst, die charakteristisch ist/sind für wenigstens eine Komponente der Vorrichtung (1), Kommandos, Steuerungseinrichtungen und/oder Parameter der Vorrichtung (1) und dergleichen sowie Kombinationen hierfür.

6. Verfahren nach dem vorangegangenen Anspruch,
wobei als wenigstens eine Eingangsgröße des, insbesondere (fertig) trainierten, Produktionsablauf-Modells die wenigstens eine Ziel-Kunststoffformteilgröße dient, wobei bevorzugt als Ziel-Kunststoffformteilgröße 3D-Daten des Werkzeugs und/oder des herzustellenden, vorgegebenen Zielkunststoffteils verwendet wird, und
das Produktionsablauf-Modell maschinellen Lernens die wenigstens eine Eingangsgröße auf die wenigstens eine, zur Herstellung des vorgegebenen Ziel-Kunststoffformteils zu verwendende Produktionsablaufgröße oder eine hierfür charakteristische Größe abbildet und/oder als Ausgangsgröße(n) die wenigstens eine, zur Herstellung des vorgegebenen Ziel-Kunststoffformteils zu verwendende Produktionsablaufgröße oder eine hierfür charakteristische Größe(n) ausgibt.

7. Verfahren nach einem der vorangegangenen Ansprüche,
**dadurch gekennzeichnet, dass**
es sich bei dem Trainingsprozess um überwachtes Lernen handelt.

8. Verfahren nach einem der vorangegangenen Ansprüche,
**dadurch gekennzeichnet, dass**
die ermittelte Vielzahl von Produktionsablaufgrößen für den gesamten Produktionsablauf charakteristisch ist.

9. Verfahren nach einem der vorangegangenen Ansprüche,
**dadurch gekennzeichnet, dass**
die wenigstens eine ermittelte Produktionsablaufgröße oder die ermittelte Vielzahl von Produktionsablaufgrößen durch Bedienereingaben änderbar ist und/oder die wenigstens eine ermittelte Produktionsablaufgröße oder die ermittelte Vielzahl von Produktionsablaufgrößen durch eine Chat-Interaktion mit einem Bediener, bevorzugt mittels Spracheingabe und/oder Texteingabe durch den Bediener, änderbar und/oder erweiterbar und/oder verfeinerbar ist.

10. Verfahren nach einem der vorangegangenen Ansprüche,
**dadurch gekennzeichnet, dass**
wenigstens eine von einem Bediener zu optimierende Produktionsablaufgröße zur Ausgabe an den Bediener ermittelt wird.

11. Verfahren nach dem vorangegangenen Anspruch,
**dadurch gekennzeichnet, dass**
die wenigstens eine von dem Bediener zu optimierende Produktionsablaufgröße zusammen mit wenigstens einem Grenzwert an den Bediener ausgegeben wird, mittels welchem dem Bediener ein Optimierungsbereich für die zu optimierende Produktionsablaufgröße angegeben wird und/oder durch die ermittelte Vielzahl von Produktionsablaufgrößen eine Reihenfolge durch die Vorrichtung (1) vorzunehmender Produktionsschritte festlegbar ist und/oder festgelegt ist/wird.

12. Verfahren nach einem der vorangegangenen Ansprüche,
**dadurch gekennzeichnet, dass**
Testfunktionen vorgegeben und/oder vorgebbar sind, mittels welchen eine Realisierbarkeit eines auf Grundlage der ermittelten Vielzahl von Produktionsablaufgrößen festgelegten und/oder festzulegenden Produktionsablauf automatisch überprüfbar sind und/oder überprüft wird.

13. Produktionsablauf-Ermittlungseinrichtung (20) zur wenigstens teilautomatischen, bevorzugt vollautomatischen, Ermittlung wenigstens einer Produktionsablaufgröße zur Herstellung eines vorgegebenen Ziel-Kunststoffformteils (22) mittels einer Vorrichtung (1), insbesondere Spritzgießmaschine, zum formgebenden Herstellen von Kunststoffformteilen (10), wobei die Vorrichtung (1) eine Vielzahl von Produktionseinrichtungen (12, 14, 16) umfassend eine Kunststoffzuführungseinrichtung (12) zur Zuführung des zu verarbeitenden Kunststoffs als Rohmaterial, eine Plastifiziereinrichtung (14) zur Plastifizierung und/oder Homogenisierung des zu verarbeitenden Kunststoffs, eine Einspritzeinrichtung zum Einspritzen des plastifizierten und/oder homogenisierten Kunststoffs in wenigstens eine Formgebungseinrichtung (16) und/oder die wenigstens eine Formgebungseinrichtung (16) zum Formen des eingespritzten Kunststoffs zu einem Kunststoffformteil aufweist, wobei die Vorrichtung (1) und/oder die Vielzahl von Produktionseinrichtungen (12, 14, 16) gemäß einer vorgegebenen und/oder vorgebbaren Vielzahl von Produktionsablaufgrößen einstellbar ist, welche charakteristisch ist für den Produktionsablauf der herzustellenden Kunststoffprodukte, **dadurch gekennzeichnet, dass**
der Produktionsablauf-Ermittlungseinrichtung (20) eine Vielzahl von Produktionsablauf-Datensätzen (2) zu, zur Herstellung von vorhergehenden Ziel-Kunststoffformteilen realisierten Produktionsabläufen bereitgestellt ist, und dass die Produktionsablauf-Ermittlungseinrichtung (20) dazu geeignet und bestimmt ist, auf Grundlage der Vielzahl von Produktionsablauf-Datensätzen und in Abhängigkeit wenigstens einer für das vorgegebene Ziel-Kunststoffformteil charakteristischen Ziel-Kunststoffformteilgröße (ZG) wenigstens eine Produktionsablaufgröße (AG1) und bevorzugt mehrere Produktionsablaufgrößen der Vielzahl von Produktionsablaufgrößen (AG1, AG2, AG3, AG4) zu ermitteln.

14. Vorrichtung (1), insbesondere Spritzgießmaschine, zum formgebenden Herstellen von Kunststoffformteilen (10), wobei die Vorrichtung (1) eine Vielzahl von Produktionseinrichtungen (12, 14, 16) umfassend eine Kunststoffzuführungseinrichtung (12) zur Zuführung des zu verarbeitenden Kunststoffs als Rohmaterial, eine Plastifiziereinrichtung (14) zur Plastifizierung und/oder Homogenisierung des zu verarbeitenden Kunststoffs, eine Einspritzeinrichtung zum Einspritzen des plastifizierten und/oder homogenisierten Kunststoffs in wenigstens eine Formgebungseinrichtung (16) und/oder die wenigstens eine Formgebungseinrichtung (16) zum Formen des eingespritzten Kunststoffs zu einem Kunststoffformteil aufweist, wobei die Vorrichtung (1) und/oder die Vielzahl von Produktionseinrichtungen (12, 14, 16) gemäß einer vorgegebenen und/oder vorgebbaren Vielzahl von Produktionsablaufgrößen einstellbar ist, welche charakteristisch ist für den Produktionsablauf der herzustellenden Kunststoffprodukte, **dadurch gekennzeichnet, dass**
wenigstens eine Produktionsablaufgröße der vorgegebenen und/oder vorgebbaren Vielzahl von Produktionsablaufgrößen entsprechend einer Produktionsablaufgröße eingestellt wird und/oder ist, welche durch ein Verfahren nach wenigstens einem vorhergehenden Anspruch ermittelt ist und/oder durch eine Produktionsablauf-Ermittlungseinrichtung gemäß dem vorhergehenden Anspruch ermittelt ist.

15. Betrieb einer Vorrichtung gemäß dem vorhergehenden Anspruch, wobei der Betrieb gemäß wenigstens einer Produktionsablaufgröße erfolgt, welche durch ein Verfahren nach wenigstens einem vorhergehenden Anspruch ermittelt ist und/oder durch eine Produktionsablauf-Ermittlungseinrichtung gemäß dem vorhergehenden Anspruch ermittelt ist.
